# EUROPEAN PATENT APPLICATION

(11) **EP 4 613 418 A1**
(43) Date of publication of application: **10.09.2025**
(21) Application number: 24875776.7
(22) Date of filing: 10.05.2024
(51) Int. Cl.: B23K 31/02, B23K 37/00, B23K 37/04

(54) **BATTERY TOP COVER WELDING SYSTEM AND BATTERY TOP COVER WELDING METHOD**

(30) Priority: 24.01.2024 CN 202410096098
(71) Applicant: Contemporary Amperex Technology Co., Limited, Jiaocheng District Ningde Fujian 352100 (CN)
(72) Inventor: FAN, Xiang, Ningde, Fujian 352100 (CN); LIAN, Shiyuan, Ningde, Fujian 352100 (CN); CHEN, Jianyun, Ningde, Fujian 352100 (CN); YIN, Zeyuan, Ningde, Fujian 352100 (CN)
(74) Representative: Kraus & Lederer PartGmbB
(86) International application number: PCT/CN2024/092398
(87) International publication number: WO 2025/156508

(57) **Abstract**

A battery top cap welding system and a battery top cap welding method are provided. The battery top cap welding system includes a transport module and a processing module. The transport module includes a battery fixture and a power mechanism, where the battery fixture is configured to clamp both a housing (012) and a top cap **(011)** of a to-be-welded battery (01) to maintain relative positions of the top cap (011) and the housing (012); and the battery fixture is disposed on an output end of the power mechanism so as to move, driven by the output end of the power mechanism, to transport the to-be-welded battery (01). The processing module includes a cleaning processing submodule, a press-fitting processing submodule (4), and a spot-welding processing submodule (6), where the cleaning processing submodule, the press-fitting processing submodule (4), and the spot-welding processing submodule (6) are all disposed at an output end of the corresponding transport module. The processing module includes a clamping tool, where the clamping tool is configured to clamp both the housing (012) and the top cap (011) to maintain the relative positions of the top cap (011) and the housing (012).

## Description

### CROSS-REFERENCE TO RELATED APPLICATIONS

This disclosure is based on Chinese Patent Application No. 202410096098.9, filed on January 24, 2024 and entitled "BATTERY TOP CAP WELDING SYSTEM AND BATTERY TOP CAP WELDING METHOD", and claims the priority of this Chinese patent application, which is incorporated herein by reference in its entirety.

### TECHNICAL FIELD

This disclosure relates to the field of battery technology, and in particular, to a battery top cap welding system and a battery top cap welding method.

### BACKGROUND

The application of new energy batteries in daily life and industry is becoming increasingly widespread. For example, new energy vehicles equipped with batteries have been widely used, and additionally, batteries are increasingly applied in fields such as energy storage.

In the production process of batteries, batteries need to be sequentially transported to multiple processing apparatuses for processing. In related technologies, the housings and top caps of batteries are typically transported sequentially to processing apparatuses for processing, resulting in low production efficiency.

### SUMMARY

This disclosure provides a battery top cap welding system and a battery top cap welding method, so as to improve battery production efficiency.

According to a first aspect, this disclosure provides a battery top cap welding system, where the battery top cap welding system includes a transport module and a processing module. The transport module includes a battery fixture and a power mechanism, where the battery fixture is configured to clamp both a housing and a top cap of a to-be-welded battery to maintain relative positions of the top cap and the housing; and the battery fixture is disposed on an output end of the power mechanism so as to move, driven by the output end of the power mechanism, to transport the to-be-welded battery. The processing module includes a cleaning processing submodule, a press-fitting processing submodule, and a spot-welding processing submodule, where the cleaning processing submodule, the press-fitting processing submodule, and the spot-welding processing submodule are all disposed at an output end of the corresponding transport module to sequentially process the same to-be-welded battery transported by the battery fixture. The processing module includes a clamping tool, where the clamping tool is configured to clamp both the housing and the top cap to maintain the relative positions of the top cap and the housing, and enable the processing module to process the to-be-welded battery.

With arrangement of the battery fixture, the battery fixture clamps both the housing and the top cap of the to-be-welded battery to maintain the relative positions of the top cap and the housing, allowing the housing and the top cap of the to-be-welded battery to be synchronously transported to the processing module for processing, thereby improving production efficiency. With arrangement of the clamping tool, after the transport module transports a battery cell to the processing module, the battery cell is transferred from a cell fixture to the clamping tool, and the clamping tool clamps the battery cell, enabling the processing module to process the battery cell. In this way, the cell fixture is freed up, and the cell fixture can return to clamp another battery cell and transport it to the processing module, thereby improving production efficiency.

In some implementations of this disclosure, the battery fixture includes two transport clamping arms disposed opposite each other along a first direction, where the two transport clamping arms together form a clamping space to clamp an outer surface of the to-be-welded battery; and in a case that the battery fixture clamps the to-be-welded battery, the top cap faces an opening of the housing, the first direction is perpendicular to an axial direction of the opening, and the two transport clamping arms each span across the top cap and the housing to clamp both the top cap and the housing along the first direction.

The two transport clamping arms clamp the outer surface of the to-be-welded battery along the first direction, such as a width direction or a length direction of the to-be-welded battery, and the two transport clamping arms each span across the top cap and the housing of the to-be-welded battery to maintain the relative positions of the top cap and the housing. This makes a simple structure of the battery fixture, allowing the to-be-welded battery to be clamped with fewer clamping arms while ensuring a stable clamping effect on the to-be-welded battery. Additionally, in a case that the transport module transports the to-be-welded battery to the processing module, the top cap faces the opening of the housing directly, allowing the processing module to conveniently perform operations, such as controlling the top cap to engage with the opening, without significant adjustment of the relative positions of the top cap and the housing.

In some implementations of this disclosure, in a case that the battery fixture is at a position corresponding to the processing module, the battery fixture and the clamping tool are staggered to enable the battery fixture and the clamping tool to jointly clamp the to-be-welded battery. The battery fixture and the corresponding clamping tool can jointly clamp the to-be-welded battery, so that during a process of transferring the to-be-welded battery through the battery fixture to the corresponding clamping tool, the relative positions of the top cap and the housing do not change much, helping to improve the cooperation quality between the housing and the top cap.

In some implementations of this disclosure, the battery top cap welding system includes a first transport module, where the cleaning processing submodule is disposed at an output end of the first transport module to clean a welding line of the to-be-welded battery transported by the first transport module; and the first transport module includes a first battery fixture, where the first battery fixture includes a first insertion member; and in a case that the first battery fixture clamps the to-be-welded battery, a first gap is present between the top cap and the opening of the housing in a thickness direction of the top cap, and the first insertion member extends into the first gap and fits with the first gap.

With arrangement of the first insertion member, the first insertion member extends into a position between the top cap and the housing, keeping a certain distance between the top cap and the housing. In this way, the welding line of the top cap and the welding line of the housing can be well exposed, allowing the cleaning processing submodule to clean the welding lines.

In some implementations of this disclosure, the first battery fixture includes two transport clamping arms disposed opposite each other, where the two transport clamping arms together form a clamping space to clamp an outer surface of the to-be-welded battery; and the first insertion member is a protrusion formed on a surface of one of the two transport clamping arms facing the other, the first insertion member is fixed to the corresponding transport clamping arm, and the first insertion member extends into the first gap along a direction in which the first insertion member protrudes relative to the corresponding transport clamping arm.

The first insertion member is disposed on the transport clamping arm, and the first insertion member extends into the first gap along the direction in which the first insertion member protrudes relative to the corresponding transport clamping arm, making the structure of the first battery fixture relatively simple, and facilitating the processing and manufacturing.

In some implementations of this disclosure, the battery top cap welding system includes a first transport module, where the cleaning processing submodule is disposed at an output end of the first transport module to clean a welding line of the to-be-welded battery transported by the first transport module; the first transport module includes a first battery fixture, where the first battery fixture includes two transport clamping arms disposed opposite each other, and the two transport clamping arms together form a clamping space to clamp an outer surface of the to-be-welded battery; and in a case that the first battery fixture clamps the to-be-welded battery, an arrangement direction of the two transport clamping arms of the first battery fixture is consistent with a length direction of the to-be-welded battery; and the first transport module further includes a first power mechanism, where the first power mechanism is capable of driving the first battery fixture to move along the arrangement direction of the two transport clamping arms, to cause a long-side cleaning module to move relative to the to-be-welded battery along a long-side welding line of the to-be-welded battery to clean the long-side welding line.

The arrangement direction of the two transport clamping arms are designed to be consistent with the length direction of the to-be-welded battery, that is, the two transport clamping arms clamp short sides of the to-be-welded battery. The two transport clamping arms are located on opposite sides of the to-be-welded battery along the length direction of the to-be-welded battery, and the transport clamping arms are not located on a side of the long-side welding line far away from the interior of the housing in the width direction of the to-be-welded battery. In this way, the long-side welding lines of the to-be-welded battery can be well exposed, and the long-side welding lines are less likely to be obstructed by the first battery fixture in the width direction of the to-be-welded battery, allowing the long-side cleaning module to effectively clean the long-side welding lines. The first power mechanism drives the first battery fixture to move along the arrangement direction of the two transport clamping arms, enabling the long-side cleaning module to move relative to the to-be-welded battery along the long-side welding lines of the to-be-welded battery, thereby improving the cleaning effect.

In some implementations of this disclosure, the first battery fixture further includes two large-surface clamping arms disposed opposite each other, where the two large-surface clamping arms together form a clamping space to clamp an outer surface of the to-be-welded battery; and in a case that the first battery fixture clamps the to-be-welded battery, the two large-surface clamping arms are both located on a side of an opening of the housing closer to an interior of the housing in an axial direction of the opening, and a direction in which the two large-surface clamping arms are disposed opposite each other is consistent with a width direction of the to-be-welded battery.

In a case that the first battery fixture clamps the to-be-welded battery, the direction in which the two large-surface clamping arms are disposed opposite each other is the width direction of the to-be-welded battery, that is, the two large-surface clamping arms clamp the outer surface of the to-be-welded battery along the width direction of the to-be-welded battery. Along the width direction of the to-be-welded battery, the two large-surface clamping arms are respectively located on opposite sides of the to-be-welded battery, so that the to-be-welded battery is clamped between the two large-surface clamping arms, improving the stability of clamping the to-be-welded battery by the first battery fixture. In a case that the first battery fixture clamps the to-be-welded battery, the two large-surface clamping arms are both located on a side of the opening of the housing closer to the interior of the housing, and the large-surface clamping arms are not opposite the long-side welding lines in the width direction of the to-be-welded battery. The large-surface clamping arms clamp the housing and are less likely to obstruct the long-side welding lines of the to-be-welded battery, facilitating effective cleaning of the long-side welding lines.

In some implementations of this disclosure, the cleaning processing submodule includes a cleaning clamping tool; where in a case that the cleaning clamping tool clamps the to-be-welded battery, the top cap faces an opening of the housing; and a cleaner of the cleaning processing submodule is movably connected to the cleaning clamping tool, so that in a case that the cleaning clamping tool clamps the to-be-welded battery, the cleaner of the cleaning processing submodule is capable of moving along a welding line of the to-be-welded battery to synchronously clean the top cap and the housing.

In a case that the cleaning clamping tool clamps the to-be-welded battery, the top cap faces the opening of the housing directly, and the cleaner of the cleaning processing submodule can synchronously clean the top cap and the housing during movement along the welding line of the to-be-welded battery, improving cleaning efficiency.

In some implementations of this disclosure, the cleaning clamping tool includes two cleaning clamping arms disposed opposite each other along a second direction, where the two cleaning clamping arms together form a clamping space to clamp an outer surface of the to-be-welded battery; and in a case that the cleaning clamping tool clamps the to-be-welded battery, the second direction is perpendicular to the axial direction of the opening, and the two cleaning clamping arms each span across the top cap and the housing to clamp both the top cap and the housing along the second direction.

The two cleaning clamping arms clamp the outer surface of the to-be-welded battery along the width direction of the to-be-welded battery, and the two cleaning clamping arms each span across the top cap and the housing of the to-be-welded battery to maintain the relative positions of the top cap and the housing. This makes a simple structure of the battery fixture, allowing the to-be-welded battery to be clamped with fewer clamping arms while ensuring a stable clamping effect on the to-be-welded battery.

In some implementations of this disclosure, the cleaning clamping tool includes a second insertion member; and in a case that the cleaning clamping tool clamps the to-be-welded battery, a second gap is present between the top cap and the opening in the thickness direction of the top cap, and the second insertion member extends into the second gap and fits with the second gap.

With arrangement of the second insertion member, the second insertion member extends into a position between the top cap and the housing, keeping a certain distance between the top cap and the housing. In this way, the welding line of the top cap and the welding line of the housing can be well exposed, allowing the cleaning processing submodule to clean the welding lines.

In some implementations of this disclosure, the second insertion member is a protrusion formed on a surface of one of the two cleaning clamping arms facing the other, and the second insertion member is fixed to the corresponding cleaning clamping arm, and the second insertion member extends into the second gap along a direction in which the second insertion member protrudes relative to the corresponding cleaning clamping arm.

The second insertion member is disposed on the cleaning clamping arm, and the second insertion member extends into the second gap along the direction in which the second insertion member protrudes relative to the corresponding cleaning clamping arm, making the structure of the cleaning clamping tool relatively simple, and facilitating the processing and manufacturing.

In some implementations of this disclosure, the cleaning processing submodule includes a short-side cleaning processing submodule; the short-side cleaning processing submodule includes a short-side cleaning clamping tool; and in a case that the short-side cleaning clamping tool clamps the to-be-welded battery, an arrangement direction of the two cleaning clamping arms of the short-side cleaning clamping tool is consistent with the width direction of the to-be-welded battery.

The two cleaning clamping arms clamp the outer surface of the to-be-welded battery along the width direction of the to-be-welded battery, so that the two cleaning clamping arms do not obstruct short-side welding lines of the top cap and the housing, facilitating the cleaning by a short-side cleaning module.

In some implementations of this disclosure, the battery top cap welding system includes a second transport module, where the short-side cleaning processing submodule is disposed at an input end of the second transport module, to enable the second transport module to transport the to-be-welded battery through the short-side cleaning processing submodule; and two transport clamping arms of a battery fixture of the second transport module are disposed opposite each other along the second direction, where the two transport clamping arms together form a clamping space to clamp an outer surface of the to-be-welded battery; and the two cleaning clamping arms are configured to clamp a third portion of the to-be-welded battery, the two transport clamping arms of the second transport module are configured to clamp a fourth portion of the to-be-welded battery, and the third portion and the fourth portion are arranged along the length direction of the to-be-welded battery, to enable the cleaning clamping arms and the transport clamping arms of the second transport module to jointly clamp the outer surface of the to-be-welded battery.

The two transport clamping arms of the battery fixture of the second transport module are disposed opposite each other along the second direction to together form a clamping space to clamp the outer surface of the to-be-welded battery. The two transport clamping arms can clamp the outer surface of the to-be-welded battery along the width direction of the to-be-welded battery, achieving a relatively stable clamping effect. The cleaning clamping arms and the transport clamping arms of the second transport module jointly clamp the outer surface of the to-be-welded battery, so that during the process of transferring the to-be-welded battery through the cleaning clamping arms to the transport clamping arms of the second transport module, the transport clamping arms of the second transport module can accurately and stably clamp the to-be-welded battery, and the relative positions of the top cap and the housing do not change much. Additionally, the third portion and the fourth portion are arranged along the length direction of the to-be-welded battery, so that when the cleaning clamping arms and the transport clamping arms of the second transport module are clamping the to-be-welded battery, they can have a large contact area with the to-be-welded battery, improving clamping stability.

In some implementations of this disclosure, the battery top cap welding system includes a second transport module, where the press-fitting processing submodule is disposed at an output end of the second transport module so as to press-fit the to-be-welded battery transported by the second transport module; and the clamping tool of the press-fitting processing submodule includes two first press-fitting clamping arms disposed opposite each other along a third direction, where the two first press-fitting clamping arms together form a clamping space to clamp an outer surface of the to-be-welded battery; and two second press-fitting clamping arms disposed opposite each other along a fourth direction, where the two second press-fitting clamping arms together form a clamping space to clamp an outer surface of the to-be-welded battery; and in a case that the clamping tool clamps the to-be-welded battery, the top cap faces an opening of the housing, the third direction and the fourth direction are respectively consistent with the length direction and the width direction of the to-be-welded battery, and the two first press-fitting clamping arms and the two second press-fitting clamping arms each span across the top cap and the housing of the to-be-welded battery to clamp both the top cap and the housing along the third direction and the fourth direction, respectively.

The first press-fitting clamping arms and the second press-fitting clamping arms clamp the outer surface of the to-be-welded battery along the length direction and the width direction of the to-be-welded battery, respectively, and the two first press-fitting clamping arms and the two second press-fitting clamping arms each span across the top cap and the housing of the to-be-welded battery. This makes a simple structure of the clamping tool of the press-fitting processing submodule, allowing the to-be-welded battery to be clamped with fewer clamping arms while ensuring a stable clamping effect on the to-be-welded battery. Additionally, the to-be-welded battery is positioned in both the length direction and the width direction, allowing for accurate and stable positioning of the to-be-welded battery, and facilitating the press-fitting process.

In some implementations of this disclosure, the battery top cap welding system includes a third transport module, where the press-fitting processing submodule is disposed at an input end of the third transport module, to enable the third transport module to transport the to-be-welded battery through the press-fitting processing submodule; and a battery fixture of the third transport module includes a pressing member, where the pressing member is configured to apply a force toward the housing onto the top cap, to maintain the top cap in a press-fitting position.

With arrangement of the pressing member, the pressing member applies a force toward the housing onto the top cap, which ensures that the relative positions of the top cap and the housing in the thickness direction of the top cap do not change much during transportation of the to-be-welded battery after press-fitting, facilitating subsequent processing of the to-be-welded battery.

In some implementations of this disclosure, the battery fixture of the third transport module includes two transport clamping arms, where the two transport clamping arms are disposed opposite each other, and the two transport clamping arms together form a clamping space to clamp an outer surface of the to-be-welded battery; and the pressing member is slidably connected to the transport clamping arm, and in a case that the two transport clamping arms clamp the outer surface of the to-be-welded battery, a direction in which the two transport clamping arms are disposed opposite each other is perpendicular to the axial direction of the opening of the housing, and a direction in which the pressing member slides relative to the transport clamping arms is consistent with the height direction of the to-be-welded battery, to enable the pressing member to apply a force toward the housing onto the top cap.

With the pressing member disposed on the transport clamping arm, the pressing member is slidably connected to the transport clamping arm, facilitating a compact structure.

In some implementations of this disclosure, the battery top cap welding system includes a third transport module, where the press-fitting processing submodule is disposed at an input end of the third transport module, to enable the third transport module to transport the to-be-welded battery through the press-fitting processing submodule; and a battery fixture of the third transport module includes a first support member, where the first support member is configured to support a side of the housing far away from the top cap, to enable the press-fitting processing submodule to press-fit the to-be-welded battery.

The first support member of the battery fixture of the third transport module provides support, enabling a pressing component to press-fit the to-be-welded battery. This helps to improve utilization of the battery fixture of the third transport module and simplify the structure. Additionally, the first support member of the battery fixture of the third transport module provides support, helping to reduce the time required for one cycle of the third transport module. Appropriately increasing the time required for one cycle of the third transport module is conducive to ensuring consistency of production rhythm, improving production efficiency.

In some implementations of this disclosure, the battery top cap welding system includes a third transport module, where the spot-welding processing submodule is disposed at an output end of the third transport module, to enable the spot-welding processing submodule to spot weld the top cap transported by the third transport module to the housing; and a clamping tool of the spot-welding processing submodule includes a first reference platform, where the first reference platform is configured to apply a force toward the housing onto the top cap along the height direction of the to-be-welded battery, to maintain the top cap in the press-fitting position and enable the spot-welding processing submodule to spot weld the to-be-welded battery; and in a case that the battery fixture of the third transport module clamps the to-be-welded battery, at least a portion of the top cap is exposed outside a clamping cavity of the battery fixture, to enable the first reference platform to abut against the top cap.

Through the first reference platform, the relative positions of the top cap and the housing can be well ensured, improving spot welding quality. In a case that the battery fixture of the third transport module clamps the to-be-welded battery, the first reference platform can abut against the top cap, so that in a case that the to-be-welded battery is transferred from the third transport module to the clamping tool of the spot-welding processing submodule, the relative positions of the top cap and the housing do not change much, improving spot welding quality.

In some implementations of this disclosure, the clamping tool of the spot-welding processing submodule includes: two first spot-welding clamping arms disposed opposite each other along a fifth direction, where the two first spot-welding clamping arms together form a clamping space to clamp an outer surface of the to-be-welded battery; and two second spot-welding clamping arms disposed opposite each other along a sixth direction, where the two second spot-welding clamping arms together form a clamping space to clamp an outer surface of the to-be-welded battery; and in a case that the clamping tool clamps the to-be-welded battery, the top cap faces the opening of the housing directly, and the fifth direction and the sixth direction are respectively consistent with the length direction and the width direction of the to-be-welded battery.

The first spot-welding clamping arms and the second spot-welding clamping arms clamp the outer surface of the to-be-welded battery along the length direction and the width direction of the to-be-welded battery, respectively, allowing the to-be-welded battery to be accurately and stably positioned in both the length direction and the width direction, improving spot welding quality.

In some implementations of this disclosure, the spot-welding processing submodule includes a step detection mechanism; the spot-welding processing submodule further includes a first frame, where the first frame is fixed relative to the step detection mechanism, and the clamping tool of the spot-welding processing submodule is slidably connected to the first frame, to enable the step detection mechanism to move relative to the to-be-welded battery along the welding line of the to-be-welded battery and perform step detection on the to-be-welded battery.

The clamping tool is slidably connected to the first frame, so that the step detection mechanism can move relative to the to-be-welded battery along the welding line of the to-be-welded battery for step detection, improving detection accuracy.

In some implementations of this disclosure, the battery top cap welding system further includes a full-welding module and a full-welding transport module, where an input end of the full-welding transport module is connected to the spot-welding processing submodule, and an output end is connected to the full-welding module to transport the to-be-welded battery from the spot-welding processing submodule to the full-welding module.

The full-welding transport module transports the to-be-welded battery from the spot-welding processing submodule to the full-welding module, so that full-welding processing and spot-welding processing of the to-be-welded battery are integrated into one production line, improving production efficiency.

In some implementations of this disclosure, the full-welding module includes a full-welding clamping tool, and the full-welding clamping tool includes a clamping mechanism and a second support member, where the clamping mechanism includes two full-welding clamping arms disposed opposite each other along a horizontal direction, where the two full-welding clamping arms together form a clamping space to clamp an outer surface of the to-be-welded battery; and along a direction in which the two full-welding clamping arms are disposed opposite each other, the second support member is located between the two full-welding clamping arms and is configured to support the to-be-welded battery located between the two full-welding clamping arms along a vertical direction.

The second support member supports the to-be-welded battery, and the clamping mechanism clamps the outer surface of the to-be-welded battery along the horizontal direction, allowing the to-be-welded battery to be stably clamped and accurately positioned, thereby improving welding quality.

In some implementations of this disclosure, the full-welding clamping tool further includes a second frame, where the two full-welding clamping arms are movably connected to the second frame to clamp or release the to-be-welded battery; and the second support member is slidably connected to the frame along the vertical direction so as to rise to a target position to support the to-be-welded battery transported by the full-welding transport module, and drive the to-be-welded battery to descend to a position between the two full-welding clamping arms, enabling the two full-welding clamping arms to clamp the to-be-welded battery.

The second support member is designed to be able to rise or descend relative to the full-welding clamping arms, so that during the process of transferring the to-be-welded battery from the full-welding transport module to the full-welding clamping tool, the full-welding transport module is less likely to interfere with the two full-welding clamping arms, facilitating smooth transfer of the to-be-welded battery from the full-welding transport module to the full-welding clamping tool.

In some implementations of this disclosure, the full-welding module further includes a second reference platform and a lifting mechanism, where the second reference platform is disposed above the full-welding clamping tool, and the lifting mechanism is capable of moving relative to the clamping mechanism along the vertical direction to apply an upward force to the to-be-welded battery, causing an upper surface of the to-be-welded battery to extend beyond the clamping mechanism and come into contact with the second reference platform.

The lifting mechanism pushes the to-be-welded battery upward, to cause the clamping mechanism to extend beyond the upper surface of the to-be-welded battery extends beyond and come into contact with the second reference platform, allowing the to-be-welded battery to be accurately positioned in the vertical direction. In this way, the to-be-welded battery is positioned in the horizontal direction by the clamping mechanism and in the vertical direction by the second reference platform, allowing the to-be-welded battery to be positioned in multiple directions with high accuracy, thereby improving welding quality.

In some implementations of this disclosure, the full-welding module further includes a fourth frame, the fourth frame is fixed relative to the second reference platform, and the full-welding clamping tool is slidably connected to the fourth frame along the horizontal direction so as to move to positions corresponding to the full-welding transport module and the second reference platform, respectively.

The full-welding clamping tool slides relative to the fourth frame along the horizontal direction to move to the positions corresponding to the full-welding transport module and the second reference platform, respectively. A relatively large distance exists between the full-welding transport module and the second reference platform, so that during the process of the full-welding transport module transporting the to-be-welded battery to the full-welding clamping tool, it is less likely to be affected by the second reference platform, facilitating smooth operation of transferring the to-be-welded battery from the full-welding transport module to the full-welding clamping tool.

In some implementations of this disclosure, the full-welding module further includes a fourth frame, where the fourth frame is fixed relative to a full-welding welder of the full-welding module, and the full-welding clamping tool is slidably connected to the fourth frame along the horizontal direction so as to move to positions corresponding to the full-welding transport module and the full-welding welder of the full-welding module, respectively, enabling the full-welding welder to perform full welding on the to-be-welded battery.

The full-welding clamping tool slides relative to the fourth frame along the horizontal direction to move to the positions corresponding to the full-welding transport module and the full-welding welder, respectively. A relatively large distance exists between the full-welding transport module and the full-welding welder, so that during the process of the full-welding transport module transporting the to-be-welded battery to the full-welding clamping tool, it is less likely to be affected by the full-welding welder, facilitating smooth operation of transferring the to-be-welded battery from the full-welding transport module to the full-welding clamping tool.

In some implementations of this disclosure, at least two clamping mechanisms are provided, the at least two clamping mechanisms are circumferentially arranged, and an axial direction of the circumferential arrangement is the vertical direction; and in a case that the full-welding clamping tool clamps the to-be-welded battery, the top cap is located on an upper side of the housing.

Multiple clamping mechanisms clamp the to-be-welded battery, allowing the to-be-welded battery to be accurately positioned in multiple directions, thereby improving welding quality. Additionally, in a case that the full-welding clamping tool clamps the to-be-welded battery, the top cap is located on the upper side of the housing, meaning that the welding lines are less likely to be obstructed by the clamping mechanisms, facilitating smooth welding.

In some implementations of this disclosure, the full-welding module further includes a protective cover handling submodule, and the protective cover handling submodule includes a third frame, a material retrieval member, and a protective cover storage member, where the protective cover storage member is configured to store a protective cover, the protective cover storage member is fixed relative to the third frame, and the material retrieval member is movably disposed on the third frame so as to move relative to the third frame to positions corresponding to the protective cover storage member and the to-be-welded battery, respectively, to place the protective cover from the protective cover storage member onto a side of the top cap far away from the housing or to place the protective cover from the to-be-welded battery onto the protective cover storage member.

The protective cover handling submodule is used to place a protective cover on the top cap of the to-be-welded battery, effectively protecting the non-welding-line region of the to-be-welded battery, and reducing the damage during the welding process. The protective cover handling submodule is used to remove the protective cover from the top cap of the to-be-welded battery, facilitating unloading of the battery. Additionally, after the protective cover handling submodule removes the protective cover from the top cap of the to-be-welded battery, the protective cover can be placed onto another to-be-welded battery by the protective cover handling submodule, implementing recycling of the protective cover, and improving production efficiency.

According to a second aspect, this disclosure provides a battery top cap welding method, applied to a battery top cap welding system. The battery top cap welding system includes a battery fixture, a power mechanism, a cleaning processing submodule, a press-fitting processing submodule, and a spot-welding processing submodule. The battery top cap welding method includes: controlling the battery fixture to clamp both a housing and a top cap of a to-be-welded battery to maintain relative positions of the top cap and the housing; and controlling the power mechanism to drive the battery fixture to move to transport the to-be-welded battery so that the to-be-welded battery is sequentially transported to the cleaning processing submodule, the press-fitting processing submodule, and the spot-welding processing submodule, enabling the cleaning processing submodule, the press-fitting processing submodule, and the spot-welding processing submodule to sequentially process the same to-be-welded battery.

With arrangement of the battery fixture, the battery fixture clamps both the housing and the top cap of the to-be-welded battery to maintain the relative positions of the top cap and the housing, allowing the housing and the top cap of the to-be-welded battery to be synchronously transported to the processing module for processing, thereby improving production efficiency.

In some implementations of this disclosure, the battery top cap welding system further includes a full-welding module; the full-welding module includes a second reference platform, a lifting mechanism, and a full-welding clamping tool, where the full-welding clamping tool includes a clamping mechanism, and the clamping mechanism is configured to clamp the to-be-welded battery along a horizontal direction; and the battery top cap welding method further includes: in a case that the to-be-welded battery is at a position corresponding to the second reference platform, controlling the lifting mechanism to move relative to the clamping mechanism along a vertical direction to apply an upward force to the to-be-welded battery, enabling an upper surface of the to-be-welded battery to extend beyond the clamping mechanism and come into contact with the second reference platform; and in a case that the upper surface of the to-be-welded battery is in contact with the second reference platform, controlling the clamping mechanism to clamp the to-be-welded battery.

The lifting mechanism applies an upward force to the to-be-welded battery, so that before the upper surface of the to-be-welded battery extends beyond a clamping space and comes into contact with the second reference platform, the clamping mechanism does not clamp the to-be-welded battery or applies only a small clamping force to the to-be-welded battery. After the upper surface of the to-be-welded battery extends beyond the clamping space and comes into contact with the second reference platform, meaning that a pose of the to-be-welded battery is adjusted to an appropriate position, the clamping mechanism then applies a relatively large clamping force to the to-be-welded battery, to stably clamp the to-be-welded battery. This helps to reduce a friction between the to-be-welded battery and the clamping mechanism during a process of the lifting mechanism pushing the to-be-welded battery.

In some implementations of this disclosure, the full-welding module further includes a protective cover handling submodule; and the battery top cap welding method further includes: controlling the protective cover handling submodule to place a protective cover onto a side of the top cap far away from the housing; controlling a full-welding welder of the full-welding module to weld the to-be-welded battery; and controlling the protective cover handling submodule to remove the protective cover from the fully welded battery.

The protective cover handling submodule is used to place a protective cover on the top cap of the to-be-welded battery, effectively protecting the non-welding-line region of the to-be-welded battery, and reducing the damage during the welding process. The protective cover handling submodule is used to remove the protective cover from the top cap of the to-be-welded battery, facilitating unloading of the battery. Additionally, after the protective cover handling submodule removes the protective cover from the top cap of the to-be-welded battery, the protective cover can be placed onto another to-be-welded battery by the protective cover handling submodule, implementing recycling of the protective cover, and improving production efficiency.

In some implementations of this disclosure, the controlling the protective cover handling submodule to place a protective cover onto a side of the top cap far away from the housing includes at least one of the following: controlling the protective cover handling submodule to place the protective cover from a protective cover storage member onto the side of the top cap far away from the housing; or controlling the protective cover handling submodule to place the protective cover from the fully welded battery onto the side of the top cap far away from the housing.

The protective cover handling submodule is controlled to place the protective cover from the fully welded battery onto the side of the top cap far away from the housing, so that after the protective cover has been used a sufficient number of times, meaning the same protective cover has been placed onto a sufficient number of to-be-welded batteries in the above manner, the material retrieval member then transports the protective cover to the protective cover storage member. This helps to improve production efficiency.

### BRIEF DESCRIPTION OF DRAWINGS

Various other advantages and benefits will become apparent to persons of ordinary skill in the art upon reading the detailed description of the preferred embodiments below. The drawings are provided solely for the purpose of illustrating the preferred embodiments and are not to be construed as limiting this disclosure. Additionally, identical components are denoted by the same reference numerals throughout all drawings. In the accompanying drawings:
FIG. 1 is a schematic structural diagram of transport clamping arms clamping a to-be-welded battery according to some embodiments of this disclosure;
FIG. 2 is a structural block diagram of a first portion of a welding production line according to some embodiments of this disclosure;
FIG. 3 is a schematic structural diagram of a first transport module transporting a to-be-welded battery to a short-side cleaning processing submodule according to some embodiments of this disclosure;
FIG. 4 is a first schematic structural diagram of a first battery fixture according to some embodiments of this disclosure;
FIG. 5 is a second schematic structural diagram of a first battery fixture according to some embodiments of this disclosure;
FIG. 6 is a schematic structural diagram of a second transport module transporting a to-be-welded battery to a press-fitting processing submodule according to some embodiments of this disclosure;
FIG. 7 is a schematic structural diagram of a clamping tool of a press-fitting processing submodule clamping a to-be-welded battery according to some embodiments of this disclosure;
FIG. 8 is a schematic structural diagram of a second battery fixture according to some embodiments of this disclosure;
FIG. 9 is a schematic structural diagram of a third battery fixture according to some embodiments of this disclosure;
FIG. 10 is a first schematic flowchart of circulation of a first battery fixture according to some embodiments of this disclosure;
FIG. 11 is a second schematic flowchart of circulation of a first battery fixture according to some embodiments of this disclosure;
FIG. 12 is a first schematic flowchart of circulation of a second battery fixture according to some embodiments of this disclosure;
FIG. 13 is a second schematic flowchart of circulation of a second battery fixture according to some embodiments of this disclosure;
FIG. 14 is a first schematic flowchart of circulation of a third battery fixture according to some embodiments of this disclosure;
FIG. 15 is a second schematic flowchart of circulation of a third battery fixture according to some embodiments of this disclosure;
FIG. 16 is a schematic structural diagram of a spot-welding processing submodule according to some embodiments of this disclosure;
FIG. 17 is a schematic structural diagram of a spot-welding clamping tool clamping a to-be-welded battery according to some embodiments of this disclosure;
FIG. 18 is a schematic flowchart of circulation of a spot-welding clamping tool according to some embodiments of this disclosure;
FIG. 19 is a schematic flowchart of a spot-welding detection transport mechanism transporting a to-be-welded battery according to some embodiments of this disclosure;
FIG. 20 is a schematic structural diagram of a spot-welding detection transport mechanism according to some embodiments of this disclosure;
FIG. 21 is a first schematic structural diagram of a full-welding clamping tool according to some embodiments of this disclosure;
FIG. 22 is a second schematic structural diagram of a full-welding clamping tool according to some embodiments of this disclosure;
FIG. 23 is a schematic structural diagram of a protective cover handling submodule according to some embodiments of this disclosure;
FIG. 24 is a schematic structural diagram of a protective cover handling submodule placing and removing a protective cover on a to-be-welded battery according to some embodiments of this disclosure;
FIG. 25 is a schematic flowchart of circulation of a full-welding clamping tool according to some embodiments of this disclosure;
FIG. 26 is a schematic flowchart of circulation of a rolling fixture according to some embodiments of this disclosure;
FIG. 27 is a schematic structural diagram of a rolling fixture according to some embodiments of this disclosure;
FIG. 28 is a schematic structural diagram of circulation of a post-welding detection fixture according to some embodiments of this disclosure;
FIG. 29 is a schematic flowchart of unloading and returning a to-be-welded battery according to some embodiments of this disclosure;
FIG. 30 is a schematic structural diagram of an unloading and returning module according to some embodiments of this disclosure;
FIG. 31 is a schematic flowchart of a battery top cap welding method according to some embodiments of this disclosure;
FIG. 32 is a schematic flowchart of clamping of a full-welding clamping tool according to some embodiments of this disclosure;
FIG. 33 is a first schematic flowchart of a protective cover handling submodule placing and removing a protective cover according to some embodiments of this disclosure;
FIG. 34 is a second schematic flowchart of a protective cover handling submodule placing and removing a protective cover according to some embodiments of this disclosure; and
FIG. 35 is a third schematic flowchart of a protective cover handling submodule placing and removing a protective cover according to some embodiments of this disclosure.

### Description of reference signs:

01. to-be-welded battery; 011. top cap; 012. housing; 02. transport clamping arm; 1. first transport module; 11. first battery fixture; 111. short-side clamping arm; 1111. first insertion member; 112. large-surface clamping arm; 113. short-side clamping cylinder; 114. large-surface clamping cylinder; 115. large-surface arm up-dowm cylinder; 116. first sliding frame; 1161. first slider; 12. first lifting cylinder; 2. short-side cleaning processing submodule; 21. cleaning clamping arm; 22. short-side cleaner; 3. second transport module; 31. second battery fixture; 311. press-fitting transport clamping arm; 312. second sliding frame; 3121. second slider; 32. second lifting cylinder; 4. press-fitting processing submodule; 41. pressing component; 42. first press-fitting clamping arm; 43. second press-fitting clamping arm; 44. fifth frame; 5. third transport module; 51. third battery fixture; 511. pressing member; 512. spot-welding transport clamping arm; 513. first support member; 54. third sliding frame; 541. third slider; 55. pressing member driving cylinder; 56. spot-welding transport clamping cylinder; 6. spot-welding processing submodule; 61. spot-welding clamping tool; 611. first reference platform; 612. first spot-welding clamping arm; 613. first spot-welding clamping cylinder; 614. second spot-welding clamping cylinder; 62. step detection mechanism; 63. spot-welding welder; 71. spot-welding detection transport mechanism; 711. detection clamping arm; 712. detection clamping cylinder; 72. spot-welding detector; 81. full-welding clamping tool; 811. first full-welding clamping arm; 812. second full-welding clamping arm; 813. first full-welding clamping cylinder; 814. second full-welding clamping cylinder; 815. second support member; 816. support member lifting cylinder; 82. lifting mechanism; 83. protective cover handling submodule; 831. third frame; 832. material retrieval member; 833. protective cover storage member; 834. protective cover cleaning mechanism; 84. second reference platform; 85. full-welding welder; 91. rolling fixture; 911. rolling reference clamping arm; 912. rolling movable clamping arm; 913. rolling clamping cylinder; 92. short-side rolling mechanism; 93. long-side rolling mechanism; 10. unloading and returning module; 101. post-welding detection mechanism; 1011. long-side detector; 1012. short-side detector; 103. post-welding detection fixture; 104. sorting module; 105. good product unloading conveyor line; 106. defective product unloading conveyor line; 107. return conveyor line; 108. transplant conveyor line; a. first direction; b. second direction; c. third direction; d. fourth direction; e. fifth direction; f. sixth direction; g. vertical direction; y1. first horizontal direction starting position; z1. first horizontal direction ending position; y2. second horizontal direction starting position; z2. second horizontal direction ending position; y3. third horizontal direction starting position; z3. third horizontal direction ending position; y4. fourth horizontal direction starting position; z4. fourth horizontal direction ending position; x1. loading position; x2. full-welding loading position; x3. full-welding unloading position; x4. rolling loading position; x5. post-welding detection loading position; x6. unloading position; x7. good product unloading position; and x8. defective product unloading position.

### DESCRIPTION OF EMBODIMENTS

The embodiments of the technical solutions of this disclosure will be described in detail below with reference to the accompanying drawings. The following embodiments are merely intended to more clearly illustrate the technical solutions of this disclosure and thus serve only as examples, not to limit the scope of protection of this disclosure.

Unless otherwise defined, all technical and scientific terms used herein have the same meanings as commonly understood by persons skilled in the technical field of this disclosure; the terms used herein are solely for the purpose of describing specific embodiments and are not intended to limit this disclosure.

Reference to "embodiment" herein means that a particular feature, structure, or characteristic described in connection with the embodiment may be included in at least one embodiment of this disclosure. The appearance of this phrase in various places in the specification does not necessarily refer to the same embodiment, nor is it an independent or alternative embodiment mutually exclusive with other embodiments. Persons skilled in the art explicitly and implicitly understand that the embodiments described herein may be combined with other embodiments.

In the description of the embodiments of this disclosure, technical steps may be interchanged in a specific order or sequence without conflict to enable the embodiments of this disclosure described herein to be implemented in an order other than that illustrated or described herein.

In the description of the embodiments of this disclosure, technical terms "first", "second", "third", and the like are used only to distinguish objects and should not be understood as indicating or implying relative importance or implicitly indicating the number, specific order, or hierarchical relationship of the indicated technical features. According to some embodiments of this disclosure, "first", "second", "third", and the like may also refer to the same object. In the description of the embodiments of this disclosure, "multiple" means two or more, unless explicitly and specifically limited otherwise.

In the description of the embodiments of this disclosure, the term "and/or" merely describes an associative relationship between associated objects, indicating that three relationships may exist, for example, A and/or B may indicate: A exists alone, A and B exist simultaneously, and B exists alone. Additionally, the character "/" herein generally indicates an "or" relationship between the associated objects before and after.

In the description of the embodiments of this disclosure, unless otherwise explicitly specified and limited, technical terms such as "install", "connect", "connection", and "fix" should be broadly understood, for example, as a fixed connection, a detachable connection, or an integral formation; a mechanical connection or an electrical connection; a direct connection or an indirect connection via an intermediate medium; an internal communication between two elements or an interaction relationship between two elements. Persons of ordinary skill in the art can understand the specific meanings of the above terms in the embodiments of this disclosure based on specific circumstances.

In the description of the embodiments of this disclosure, unless otherwise explicitly specified and limited, the technical term "abut" should be broadly understood, for example, as direct contact or contact via an intermediate medium layer, as contact between two entities with substantially no interaction force, or as contact between two entities with an interaction force.

The following provides a detailed description of this disclosure.

Currently, the application of new energy batteries in daily life and industry is becoming increasingly widespread. New energy batteries are not only applied in energy storage power systems such as hydropower, thermal power, wind power, and solar power plants, but also widely used in electric vehicles such as electric bicycles, electric motorcycles, and electric cars, as well as in various fields such as aerospace. With the continuous expansion of application fields for power batteries, market demand for power batteries is also continuously increasing.

In the production process of batteries, batteries need to be sequentially transported to multiple processing apparatuses for processing. In related technologies, the battery housing and top cap are typically transported sequentially to processing apparatuses for processing, resulting in low production efficiency.

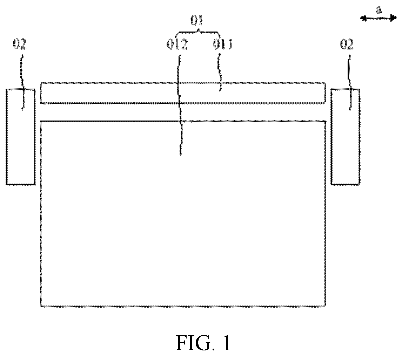

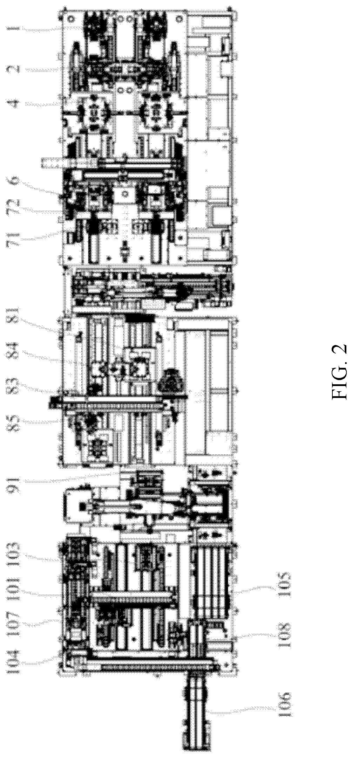

Referring to FIG. 1 and FIG. 2, an embodiment of this disclosure provides a battery top cap welding system, where the battery top cap welding system includes a transport module and a processing module. The transport module includes a battery fixture and a power mechanism; the battery fixture is configured to clamp both a housing 012 and a top cap 011 of a to-be-welded battery 01 to maintain relative positions of the top cap 011 and the housing 012; the battery fixture is disposed on an output end of the power mechanism so as to move, driven by the output end of the power mechanism, to transport the to-be-welded battery 01; the processing module includes a cleaning processing submodule, a press-fitting processing submodule 4, and a spot-welding processing submodule 6, where the cleaning processing submodule, the press-fitting processing submodule 4, and the spot-welding processing submodule 6 are all disposed at an output end of the corresponding transport module to sequentially process the same to-be-welded battery 01 transported by the battery fixture. With arrangement of the battery fixture, the battery fixture clamps both the housing 012 and the top cap 011 of the to-be-welded battery 01 to maintain the relative positions of the top cap 011 and the housing 012, allowing the housing 012 and the top cap 011 of the to-be-welded battery 01 to be synchronously transported to the processing module for processing, thereby improving production efficiency.

The battery in the embodiments of this disclosure can be implemented in various forms. According to some embodiments of this disclosure, the battery can be a secondary battery. The secondary battery refers to a battery that can be recharged to activate active materials for continued use after discharge. The battery can be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which are not limited in the embodiments of this disclosure.

The battery top cap welding system provided in the embodiments of this disclosure is configured to weld the top cap 011 of a battery to the housing 012. According to some embodiments of this disclosure, the battery is a battery cell, where the housing 012 is configured to package components such as an electrode assembly and an electrolyte. The housing 012 can be a steel shell, an aluminum shell, a plastic shell (such as polypropylene), a composite metal shell (such as a copper-aluminum composite shell), an aluminum-plastic film, or the like. An accommodation cavity with an opening is formed in the housing 012. After a bare cell enters the accommodation cavity through the opening, the battery top cap welding system welds an edge of the top cap 011 to an edge of the opening, joining the top cap 011 to the opening to close the accommodation cavity, thereby forming the battery cell.

Referring to FIG. 1 and FIG. 2, an embodiment of this disclosure provides a battery top cap welding system, where the battery top cap welding system includes a transport module and a processing module. The transport module includes a battery fixture and a power mechanism; the battery fixture is configured to clamp both a housing 012 and a top cap 011 of a to-be-welded battery 01 to maintain relative positions of the top cap 011 and the housing 012; the battery fixture is disposed on an output end of the power mechanism so as to move, driven by the output end of the power mechanism, to transport the to-be-welded battery 01; the processing module includes a cleaning processing submodule, a press-fitting processing submodule 4, and a spot-welding processing submodule 6, where the cleaning processing submodule, the press-fitting processing submodule 4, and the spot-welding processing submodule 6 are all disposed at an output end of the corresponding transport module to sequentially process the same to-be-welded battery 01 transported by the battery fixture.

With arrangement of the battery fixture, the battery fixture clamps both the housing 012 and the top cap 011 of the to-be-welded battery 01 to maintain the relative positions of the top cap 011 and the housing 012, allowing the housing 012 and the top cap 011 of the to-be-welded battery 01 to be synchronously transported to the processing module for processing, thereby improving production efficiency.

According to some embodiments of this disclosure, referring to FIG. 1 and FIG. 2, the battery fixture includes two transport clamping arms 02 disposed opposite each other along a first direction a, where the two transport clamping arms 02 together form a clamping space to clamp an outer surface of the to-be-welded battery 01. In a case that the battery fixture clamps the to-be-welded battery 01, the top cap 011 faces an opening of the housing 012, the first direction a is perpendicular to an axial direction of the opening, for example, the first direction is consistent with a width direction or a length direction of the to-be-welded battery 01. The two transport clamping arms 02 each span across the top cap 011 and the housing 012 to clamp both the top cap 011 and the housing 012 along the first direction a.

In the embodiments of this disclosure, the two transport clamping arms 02 are disposed opposite each other along the first direction a, and the two transport clamping arms 02 together form a clamping space to clamp the outer surface of the to-be-welded battery 01. The clamping space is a space between the two transport clamping arms along the first direction. In a case that the battery fixture clamps the to-be-welded battery 01, the to-be-welded battery 01 is located within the clamping space. Along the first direction a, the two transport clamping arms 02 are located on opposite sides of the to-be-welded battery 01, and the to-be-welded battery 01 is clamped between the two transport clamping arms 02 along the first direction a. The two transport clamping arms 02 respectively abut against end faces at two ends of the to-be-welded battery 01 in the first direction a. Along the first direction a, among the end faces at two ends of the to-be-welded battery 01, each transport clamping arm 02 applies a force toward the other end face to the end face abutting against the transport clamping arm 02, meaning that the two transport clamping arms 02 clamp the outer surface of the to-be-welded battery 01 along the first direction a. The subsequent description of two clamping arms disposed opposite each other forming a clamping space to clamp the to-be-welded battery 01 follows the same principle.

In the embodiments of this disclosure, the top cap 011 faces the opening of the housing 012, that is, the top cap 011 and the opening of the housing 012 are disposed opposite each other, and a contour of a projection of the top cap 011 along a thickness direction onto the housing 012 matches a circumferential contour of the opening. According to some embodiments of this disclosure, referring to FIG. 1 and FIG. 2, in a case that the battery fixture clamps the to-be-welded battery 01, a thickness direction of the top cap 011 is consistent with a vertical direction g, and the opening faces upward. In this way, in a case that the battery fixture clamps the to-be-welded battery 01, the top cap 011 remains facing the opening.

In the embodiments of this disclosure, the first direction a is consistent with the width direction of the to-be-welded battery 01, that is, the two transport clamping arms 02 clamp the outer surface of the to-be-welded battery 01 along the width direction of the to-be-welded battery 01, meaning that the to-be-welded battery 01 is clamped between the two transport clamping arms 02 along the width direction. In this state, the two transport clamping arms 02 are respectively located on opposite sides of the to-be-welded battery 01 in the width direction, the to-be-welded battery 01 is located between the two transport clamping arms 02 in the width direction, and the two transport clamping arms 02 respectively abut against end faces at two ends of the to-be-welded battery 01 in the width direction. Along the width direction of the to-be-welded battery 01, among the end faces at two ends of the to-be-welded battery 01, each transport clamping arm 02 applies a force toward the other end face to the end face abutting against the transport clamping arm 02, meaning that the two transport clamping arms 02 clamp the outer surface of the to-be-welded battery 01 along the width direction of the to-be-welded battery 01.

In the embodiments of this disclosure, the first direction a is consistent with the length direction of the to-be-welded battery 01, that is, the two transport clamping arms 02 clamp the outer surface of the to-be-welded battery 01 along the length direction of the to-be-welded battery 01, meaning that the to-be-welded battery 01 is clamped between the two transport clamping arms 02 along the length direction. In this state, the two transport clamping arms 02 are respectively located on opposite sides of the to-be-welded battery 01 in the length direction, the to-be-welded battery 01 is located between the two transport clamping arms 02 in the length direction, and the two transport clamping arms 02 respectively abut against end faces at two ends of the to-be-welded battery 01 in the length direction. Along the length direction of the to-be-welded battery 01, among the end faces at two ends of the to-be-welded battery 01, each transport clamping arm 02 applies a force toward the other end face to the end face abutting against the transport clamping arm 02, meaning that the two transport clamping arms 02 clamp the outer surface of the to-be-welded battery 01 along the length direction of the to-be-welded battery 01. The subsequent description of an arrangement direction of the opposite clamping arms in a clamping state being consistent with the length direction or width direction of the to-be-welded battery 01 follows the same principle.

In the embodiments of this disclosure, the transport clamping arms 02 span across the top cap 011 and the housing 012 of the to-be-welded battery 01 to maintain the relative positions of the top cap 011 and the housing 012, that is, along a height direction of the to-be-welded battery 01, a first end of each transport clamping arm 02 abuts against the housing 012, and a second end abuts against the top cap 011. The first ends of the two transport clamping arms 02 are disposed opposite each other along the first direction a, together forming a clamping space to clamp the housing 012. The housing 012 is clamped between the first ends of the two transport clamping arms 02 along the first direction a. The second ends of the two transport clamping arms 02 are disposed opposite each other along the first direction a, together forming a clamping space to clamp the top cap 011. The top cap 011 is clamped between the second ends of the two transport clamping arms 02 along the first direction a.

The first ends of the two transport clamping arms 02 are respectively located on opposite sides of the housing 012 in the first direction a, the housing 012 is located between the first ends of the two transport clamping arms 02 in the first direction a, and the first ends of the two transport clamping arms 02 respectively abut against end faces at two ends of the housing 012 in the first direction a. Along the first direction a, among the end faces at two ends of the housing 012, the first end of each transport clamping arm 02 applies a force toward the other end face to the end face abutting against the first end.

The second ends of the two transport clamping arms 02 are respectively located on opposite sides of the top cap 011 in the first direction a, the top cap 011 is located between the second ends of the two transport clamping arms 02 in the first direction a, and the second ends of the two transport clamping arms 02 respectively abut against end faces at two ends of the top cap 011 in the first direction a. Along the first direction a, among the end faces at two ends of the top cap 011, the second end of each transport clamping arm 02 applies a force toward the other end face to the end face abutting against the second end. The subsequent description of clamping arms spanning across the top cap 011 and the housing 012 of the to-be-welded battery 01 to clamp both the top cap 011 and the housing 012 follows the same principle.

In the embodiments of this disclosure, the height direction of the to-be-welded battery 01, the thickness direction of the top cap 011, and the axial direction of the opening are the same. The width direction of the to-be-welded battery 01 is perpendicular to the length direction of the to-be-welded battery 01, and both the width direction and the length direction of the to-be-welded battery 01 are perpendicular to the height direction of the to-be-welded battery 01.

The two transport clamping arms 02 clamp the outer surface of the to-be-welded battery 01 along the width direction or the length direction of the to-be-welded battery 01, and the two transport clamping arms 02 each span across the top cap 011 and the housing 012 of the to-be-welded battery 01 to maintain the relative positions of the top cap 011 and the housing 012. This makes a simple structure of the battery fixture, allowing the to-be-welded battery 01 to be clamped with fewer clamping arms while ensuring a stable clamping effect on the to-be-welded battery 01. Additionally, in a case that the transport module transports the to-be-welded battery 01 to the processing module, the top cap 011 faces the opening of the housing 012, allowing the processing module to conveniently perform operations, such as controlling the top cap 011 to engage with the opening, without significant adjustment of the relative positions of the top cap 011 and the housing 012. The transport module in this embodiment may refer to a first transport module 1, a second transport module 3, a third transport module 5, or the like.

According to some embodiments of this disclosure, referring to FIG. 1 and FIG. 2, the two transport clamping arms 02 can move toward and away from each other along an arrangement direction to clamp or release the to-be-welded battery 01. In this way, the battery fixture can clamp to-be-welded batteries 01 of various sizes, improving compatibility of the battery top cap welding system.

According to some embodiments of this disclosure, referring to FIG. 1 and FIG. 2, the battery fixture further includes a force sensor, where the force sensor is configured to sense a clamping force between the battery fixture and the outer surface of the to-be-welded battery 01. In this way, the force sensor can indicate whether the battery fixture provides proper clamping.

According to some embodiments of this disclosure, referring to FIG. 1 and FIG. 2, in a case that the battery fixture clamps the to-be-welded battery 01, the first direction a is consistent with the length direction of the to-be-welded battery 01, the two transport clamping arms 02 each include at least two transport sub-arms, and the transport sub-arms of the two transport clamping arms 02 are disposed in a one-to-one correspondence, where the corresponding transport sub-arms are disposed opposite each other, and the corresponding transport sub-arms together form a clamping space to clamp the outer surface of the to-be-welded battery 01. In a case that the to-be-welded battery is clamped, the at least two transport sub-arms belonging to the same transport clamping arm 02 are arranged along the length direction of the to-be-welded battery 01. This facilitates stable clamping for the to-be-welded battery 01. According to some embodiments of this disclosure, the two transport clamping arms 02 each may include two transport sub-arms. According to some embodiments of this disclosure, two transport sub-arms belonging to a same transport clamping arm 02 may be configured to respectively clamp two ends of the to-be-welded battery 01 in the length direction. The transport module in this embodiment may refer to a first transport module 1, a second transport module 3, a third transport module 5, or the like.

According to some embodiments of this disclosure, referring to FIG. 1 and FIG. 2, in a case that the battery fixture clamps the to-be-welded battery, the axial direction of the opening remains unchanged, and the power mechanism is capable of driving the battery fixture to move along a direction perpendicular to the axial direction of the opening, such as a horizontal direction. This allows the battery fixture to transport the to-be-welded battery 01 to a position horizontally aligned with a corresponding portion of the processing module, enabling the processing module to process the to-be-welded battery 01 transported by the battery fixture. In this way, the processing module can process the to-be-welded battery 01 transported by the battery fixture. The transport module in this embodiment may refer to a first transport module 1, a second transport module 3, a third transport module 5, or the like.

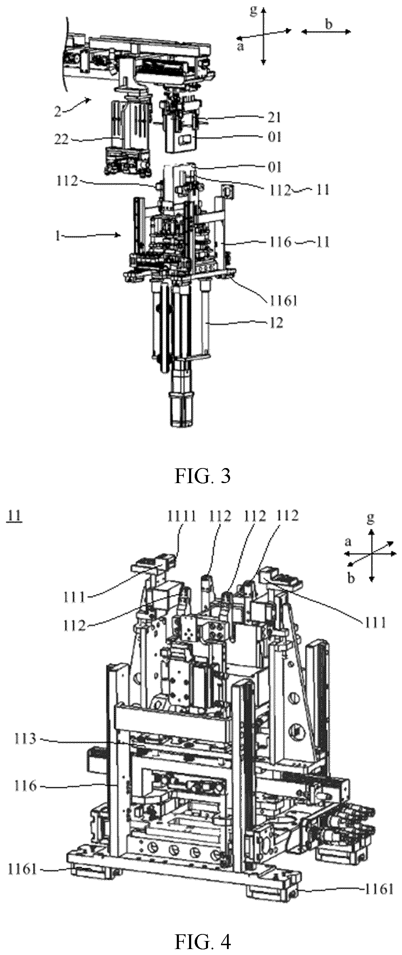

According to some embodiments of this disclosure, referring to FIG. 3, FIG. 4, and FIG. 5, a first battery fixture 11 is disposed on a first sliding frame 116, the first sliding frame 116 has a first slider 1161, the first slider 1161 is slidably connected to a slide rail along a horizontal direction, and the power mechanism is capable of driving the first sliding frame 116 to slide relative to the slide rail, enabling the first battery fixture 11 to transport the to-be-welded battery 01 to a position horizontally aligned with a corresponding portion of the processing module.

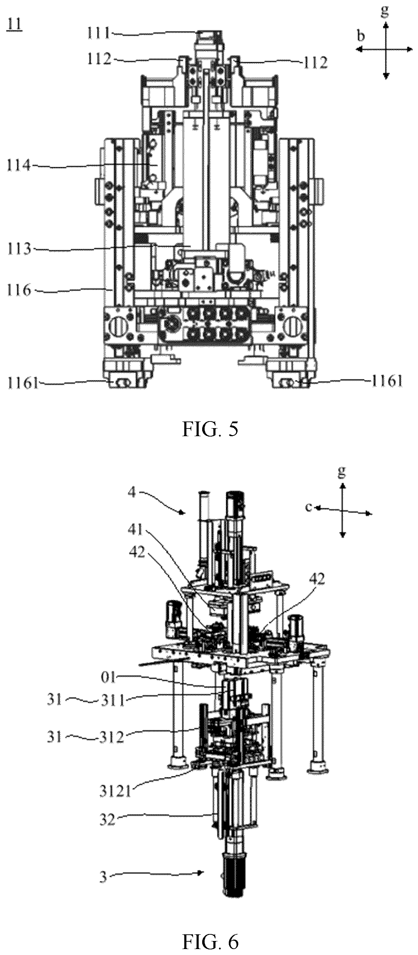

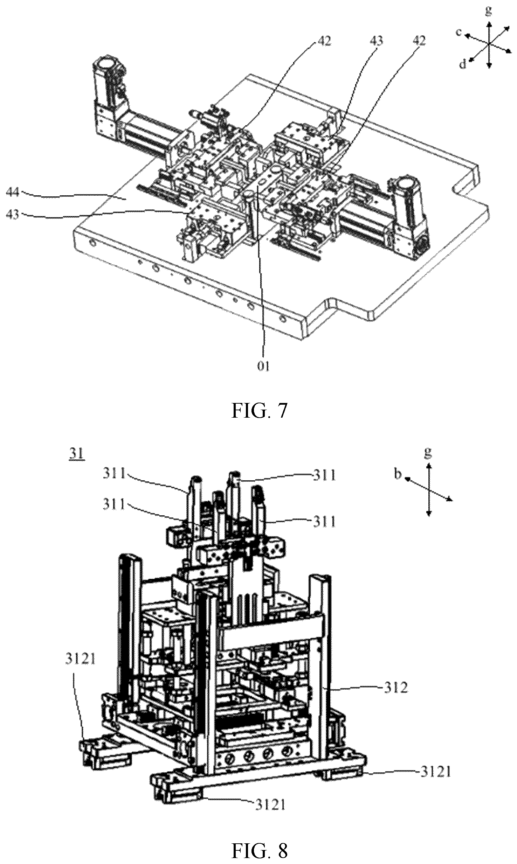

According to some embodiments of this disclosure, referring to FIG. 6, FIG. 7, and FIG. 8, a second battery fixture 31 is disposed on a second sliding frame 312, the second sliding frame 312 has a second slider 3121, the second slider 3121 is slidably connected to a slide rail along a horizontal direction, and the power mechanism is capable of driving the second sliding frame 312 to slide relative to the slide rail, enabling the second battery fixture 31 to transport the to-be-welded battery 01 to a position horizontally aligned with a corresponding portion of the processing module.

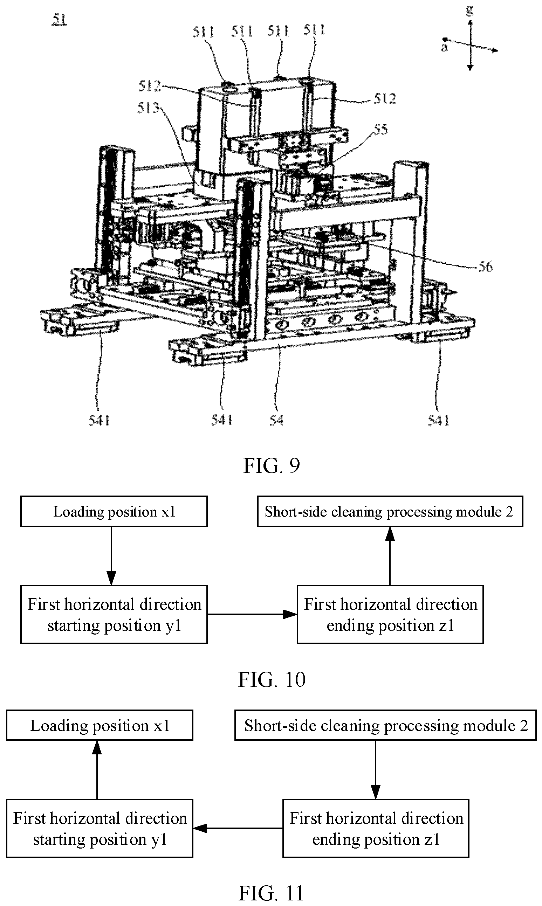

According to some embodiments of this disclosure, referring to FIG. 9, a third battery fixture 51 is disposed on a third sliding frame 54, the third sliding frame 54 has a third slider 541, the third slider 541 is slidably connected to a slide rail along a horizontal direction, and the power mechanism is capable of driving the third sliding frame 54 to slide relative to the slide rail, enabling the third battery fixture 51 to transport the to-be-welded battery 01 to a position horizontally aligned with a corresponding portion of the processing module.

According to some embodiments of this disclosure, the power mechanism includes a lifting cylinder. The lifting cylinder is capable of driving the battery fixture to move along a vertical direction g, so that in a case that the battery fixture transports the to-be-welded battery 01 to a position horizontally aligned with a corresponding portion of the processing module, the lifting cylinder can drive the battery fixture to move upward, so as to raise the to-be-welded battery 01 to a position corresponding to a clamping tool of the processing module, enabling the clamping tool of the processing module to clamp the to-be-welded battery 01, and allowing the processing module to process the to-be-welded battery 01. The processing module is a processing module located at an output end of the transport module. In this way, during a process of the battery fixture transporting the to-be-welded battery 01 along the horizontal direction, the battery fixture is less likely to interfere with the clamping tool. The transport module in this embodiment may refer to a first transport module 1, a second transport module 3, a third transport module 5, or the like.

For example, according to some embodiments of this disclosure, referring to FIG. 3, FIG. 4, and FIG. 5, the first battery fixture 11 is slidably connected to the first sliding frame 116 along a vertical direction. In a case that the first battery fixture 11 transports the to-be-welded battery 01 to a position horizontally aligned with a corresponding portion of the processing module, the lifting cylinder is capable of driving the first battery fixture 11 to move upward relative to the first sliding frame, causing the to-be-welded battery 01 to rise to a position corresponding to a clamping tool of the processing module.

According to some embodiments of this disclosure, referring to FIG. 3, FIG. 4, and FIG. 5, a power mechanism of a first transport module 1 includes a first lifting cylinder 12. The first lifting cylinder 12 is capable of driving the first battery fixture 11 to move along a vertical direction g, so that in a case that the first battery fixture 11 transports the to-be-welded battery 01 to a position level with a corresponding part of a processing module in a horizontal direction, the first battery fixture 11 is capable of driving the first battery fixture 11 to move upward, to cause the to-be-welded battery 01 to rise to a position corresponding to a clamping tool, enabling the clamping tool to clamp the to-be-welded battery 01.

According to some embodiments of this disclosure, referring to FIG. 3, FIG. 4, FIG. 5, and FIG. 10, arrows in FIG. 2 indicate a flow direction of the first battery fixture 11 from a loading position x1 to a short-side cleaning processing submodule 2. The first battery fixture 11 first receives material at the loading position x1, and then the first lifting cylinder 12 contracts, causing the first battery fixture 11 to move downward from the loading position x1 to a first horizontal direction starting position y1 directly below the loading position x1. Subsequently, the first lifting cylinder 12 remains contracted, and the first battery fixture 11 moves along a horizontal direction to a first horizontal direction ending position z1 directly below the short-side cleaning processing submodule 2. Then, the first lifting cylinder 12 lifts, driving the first battery fixture 11 to rise to the short-side cleaning processing submodule 2.

According to some embodiments of this disclosure, referring to FIG. 3, FIG. 4, FIG. 5, and FIG. 11, a process of the first battery fixture 11 returning from the short-side cleaning processing submodule 2 to the loading position x1 can be opposite to the above process. First, the first lifting cylinder 12 contracts, causing the first battery fixture 11 to move downward from the short-side cleaning processing submodule 2 to the first horizontal direction ending position z1. Then, the first lifting cylinder 12 remains contracted, and the first battery fixture 11 moves along a horizontal direction from the first horizontal direction ending position z1 to the first horizontal direction starting position y1. Subsequently, the first lifting cylinder 12 lifts, driving the first battery fixture 11 to rise to the loading position x1 to receive material.

According to some embodiments of this disclosure, referring to FIG. 6, FIG. 7, and FIG. 8, a power mechanism of a second transport module 3 includes a second lifting cylinder 32. The second lifting cylinder 32 is capable of driving a second battery fixture 31 to move along a vertical direction g, so that in a case that the second battery fixture 31 transports the to-be-welded battery 01 to a position level with a corresponding part of a processing module in a horizontal direction, the second battery fixture 31 is capable of driving the second battery fixture 31 to move upward, to cause the to-be-welded battery 01 to rise to a position corresponding to a clamping tool, enabling the clamping tool to clamp the to-be-welded battery 01.

According to some embodiments of this disclosure, referring to FIG. 6, FIG. 7, FIG. 8, and FIG. 12, arrows in FIG. 4 indicate a flow direction of the second battery fixture 31 from the short-side cleaning processing submodule 2 to the press-fitting processing submodule 4. The second battery fixture 31 first receives material at the short-side cleaning processing submodule 2, and then the second lifting cylinder 32 contracts, causing the second battery fixture 31 to move downward from the short-side cleaning processing submodule 2 to a second horizontal direction starting position y2 directly below the short-side cleaning processing submodule 2. Subsequently, the second lifting cylinder 32 remains contracted, and the second battery fixture 31 moves along a horizontal direction to a second horizontal direction ending position z2 directly below the press-fitting processing submodule 4. Then, the second lifting cylinder 32 lifts, driving the second battery fixture 31 to rise to the press-fitting processing submodule 4.

According to some embodiments of this disclosure, referring to FIG. 6, FIG. 7, FIG. 8, and FIG. 13, a process of the second battery fixture 31 returning from the press-fitting processing submodule 4 to the short-side cleaning processing submodule 2 can be opposite to the above process. First, the second lifting cylinder 32 contracts, causing the second battery fixture 31 to move downward from the press-fitting processing submodule 4 to the second horizontal direction ending position z2. Then, the second lifting cylinder 32 remains contracted, and the second battery fixture 31 moves along a horizontal direction from the second horizontal direction ending position z2 to the second horizontal direction starting position y2. Subsequently, the second lifting cylinder 32 lifts, driving the second battery fixture 31 to rise to the short-side cleaning processing submodule 2 to receive material.

According to some embodiments of this disclosure, referring to FIG. 9, a power mechanism of a third transport module 5 includes a third lifting cylinder. The third lifting cylinder is capable of driving a third battery fixture 51 to move along a vertical direction g, so that in a case that the third battery fixture 51 transports the to-be-welded battery 01 to a position level with a corresponding part of a processing module in a horizontal direction, the third battery fixture 51 is capable of driving the third battery fixture 51 to move upward, to cause the to-be-welded battery 01 to rise to a position corresponding to a clamping tool, enabling the clamping tool to clamp the to-be-welded battery 01.

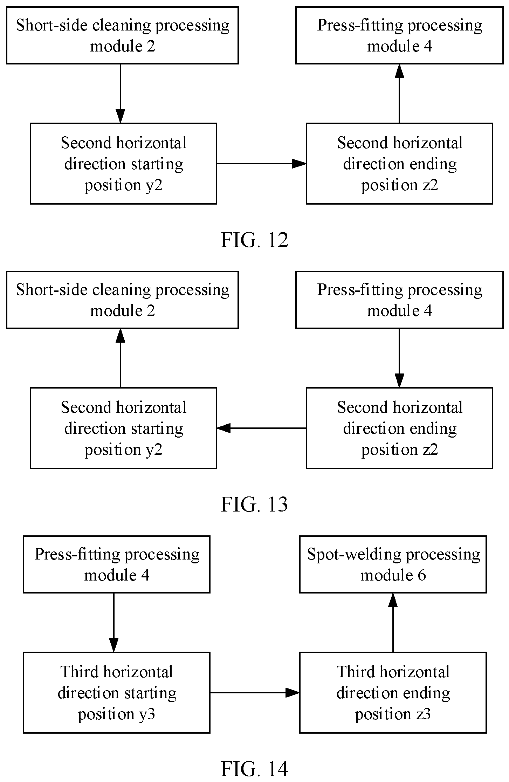

According to some embodiments of this disclosure, referring to FIG. 9 and FIG. 14, arrows in FIG. 6 indicate a flow direction of the third battery fixture 51 from the press-fitting processing submodule 4 to the spot-welding processing submodule 6. The third battery fixture first receives material at the press-fitting processing submodule 4, and then the third lifting cylinder contracts, causing the third battery fixture 51 to move downward from the press-fitting processing submodule 4 to a third horizontal direction starting position y3 directly below the press-fitting processing submodule 4. Subsequently, the third lifting cylinder remains contracted, and the third battery fixture 51 moves along a horizontal direction to a third horizontal direction ending position z3 directly below the spot-welding processing submodule 6. Then, the third lifting cylinder lifts, driving the third battery fixture 51 to rise to the spot-welding processing submodule 6.

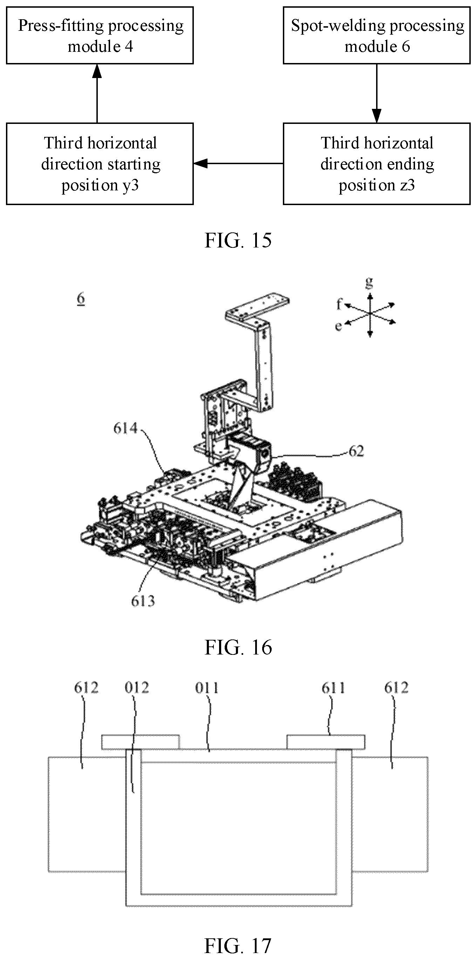

According to some embodiments of this disclosure, referring to FIG. 9 and FIG. 15, a process of the third battery fixture 51 returning from the spot-welding processing submodule 6 to the press-fitting processing submodule 4 can be opposite to the above process. First, the third lifting cylinder contracts, causing the third battery fixture 51 to move downward from the spot-welding processing submodule 6 to the third horizontal direction ending position z3. Then, the third lifting cylinder remains contracted, and the third battery fixture 51 moves along a horizontal direction from the third horizontal direction ending position z3 to the third horizontal direction starting position y3. Subsequently, the third lifting cylinder lifts, driving the third battery fixture 51 to rise to the press-fitting processing submodule 4 to receive material.

According to some embodiments of this disclosure, referring to FIG. 1 and FIG. 2, at least two processing modules are provided and arranged sequentially. The transport module is disposed between every two adjacent processing modules, enabling the transport module to transport the to-be-welded battery 01 from one of the two adjacent processing modules to another, so that the to-be-welded battery 01 can be sequentially transported to each processing module.

In the embodiments of this disclosure, the to-be-welded battery 01 is sequentially transported to each processing module. For example, three processing modules are provided, namely a first processing module, a second processing module, and a third processing module. A transport module, hereinafter referred to as a 1st transport module, is disposed between the first processing module and the second processing module. Another transport module, hereinafter referred to as a 2nd transport module, is disposed between the second processing module and the third processing module. The 1st transport module transports the to-be-welded battery 01 from the first processing module to the second processing module, and the 2nd transport module transports the to-be-welded battery 01 from the second processing module to the third processing module. In this way, the to-be-welded battery 01 is sequentially transported to the first processing module, the second processing module, and the third processing module, meaning the to-be-welded battery 01 can be sequentially transported to each processing module. In some embodiments of this disclosure, the first processing module may be the cleaning processing submodule, the second processing module may be the press-fitting processing submodule 4, and the third processing module may be the spot-welding processing submodule 6.

The transport module transfers the to-be-welded battery 01 between two processing modules, so that the to-be-welded battery 01 can be sequentially transported to each processing module, thereby improving production efficiency.

In some embodiments of this disclosure, at least two processing modules are arranged sequentially along a horizontal direction. This arrangement is easy to implement with low costs.

On this basis, according to some embodiments of this disclosure, referring to FIG. 1 and FIG. 2, at least two processing modules can be arranged sequentially along a straight line. The transport module between every two adjacent processing modules can synchronously transport the to-be-welded battery 01 along a horizontal direction. This results in higher transport efficiency. Taking synchronous transport of the to-be-welded battery 01 by the 1st transport module and the 2nd transport module as an example, in some embodiments of this disclosure, the first processing module, the second processing module, and the third processing module can be arranged sequentially along a straight line. A battery fixture of the 1st transport module, hereinafter referred to as a 1st battery fixture, and a battery fixture of the 2nd transport module, hereinafter referred to as a 2nd battery fixture, move synchronously along a horizontal direction to transport the to-be-welded battery 01, that is, along an arrangement direction of the first processing module, the second processing module, and the third processing module. In a case that the 1st battery fixture is at a position level with the first processing module, the 2nd battery fixture is at a position level with the second processing module. Along the arrangement direction of the first processing module, the second processing module, and the third processing module, during a process of the 1st battery fixture moving from the first processing module to the second processing module, the 2nd battery fixture synchronously moves from the second processing module to the third processing module. In a case that the 1st battery fixture moves to a position level with the second processing module, the 2nd battery fixture moves to a position level with the third processing module. Along the arrangement direction of the first processing module, the second processing module, and the third processing module, during a process of the 1st battery fixture moving from a position level with the second processing module to the first processing module, the 2nd battery fixture moves from a position level with the third processing module to the second processing module. During the above movement process, in a case that the 1st battery fixture moves to a position level with the first processing module, the 2nd battery fixture moves to a position level with the second processing module.

On this basis, according to some embodiments of this disclosure, referring to FIG. 1, FIG. 2, and FIG. 10, the battery top cap welding system further includes a 3rd transport module. The 3rd transport module is disposed between the loading position x1 and the first transport module 1 to transport the to-be-welded battery 01 from the loading position x1 to the first transport module 1. The loading position x1, the first processing module, the second processing module, and the third processing module are arranged sequentially along a straight line. The 1st transport module, the second transport module 3, and the 3rd transport module can synchronously transport the to-be-welded battery 01 along a horizontal direction.

In some embodiments of this disclosure, in a case that the power mechanism includes the lifting cylinder, the 1st battery fixture and the 2nd battery fixture can be synchronously lifted by the corresponding lifting cylinders to positions corresponding to clamping tools of the corresponding processing modules, enabling the corresponding clamping tools to clamp the to-be-welded battery 01.

According to some embodiments of this disclosure, referring to FIG. 1 and FIG. 2, the processing module includes a clamping tool. The clamping tool is configured to clamp both the housing 012 and the top cap 011 to maintain the relative positions of the top cap 011 and the housing 012, and enable the processing module to process the to-be-welded battery 01. In a case that the battery fixture is at a position corresponding to the processing module, the battery fixture is staggered with the clamping tool, enabling the battery fixture and the clamping tool to jointly clamp the to-be-welded battery 01.

In the embodiments of this disclosure, the clamping tool can clamp the outer surface of the to-be-welded battery 01. In a clamping state, the clamping tool remains at a certain position relative to a processing unit of the processing module, so that the to-be-welded battery 01 remains at a certain position relative to the processing unit, enabling the processing unit to process the to-be-welded battery 01. For example, the processing module is a cleaning processing submodule configured to clean the to-be-welded battery 01, and a processing unit of the cleaning processing submodule is a cleaner of the cleaning processing submodule, where the cleaner can be an ultrasonic air knife or the like. The processing module is a welding processing module configured for welding, and a processing unit of the welding processing module is a welder of the welding processing module, where the welder can be a laser or the like. A clamping tool of the cleaning processing submodule, a clamping tool of a press-fitting processing submodule 4, and a clamping tool of a spot-welding processing submodule 6 each can clamp the to-be-welded battery 01 together with a corresponding battery fixture.

The battery fixture and the corresponding clamping tool jointly clamp the to-be-welded battery 01, so that the relative positions of the top cap 011 and the housing 012 do not change much during a process of transferring the to-be-welded battery 01 from the battery fixture to the corresponding clamping tool, improving the cooperation quality between the housing 012 and the top cap 011.

During a process of transferring the to-be-welded battery 01 from the battery fixture to the corresponding clamping tool, the battery fixture and the corresponding clamping tool can first jointly clamp the to-be-welded battery 01. In this case, the battery fixture clamps both the housing 012 and the top cap 011, and the clamping tool also clamps both the housing 012 and the top cap 011. Subsequently, the battery fixture releases the to-be-welded battery 01, allowing the clamping tool to solely clamp the to-be-welded battery 01. In this case, the clamping tool clamps both the housing 012 and the top cap 011. In this way, during the process of transferring the to-be-welded battery 01 from the battery fixture to the corresponding clamping tool, the relative positions of the top cap 011 and the housing 012 do not change much.

In some embodiments of this disclosure, in a case that the clamping tool clamps the to-be-welded battery 01, a thickness direction of the top cap 011 is consistent with a vertical direction g, and the opening faces upward. This arrangement is easy to implement with low costs.

The following describes the embodiments of this disclosure in conjunction with specific transport modules and processing modules.

According to some embodiments of this disclosure, referring to FIG. 3, FIG. 4, and FIG. 5, the battery top cap welding system includes a first transport module 1 and a cleaning processing submodule. The cleaning processing submodule is disposed at an output end of the first transport module 1 to clean a welding line of the to-be-welded battery 01 transported by the first transport module 1.

The first transport module 1 in the embodiments of this disclosure refers to a transport module of the battery top cap welding system. That is, the battery top cap welding system may include several transport modules, which can be one or more transport modules. The first transport module 1 is one of the several transport modules. The same principle applies to a second transport module 3 and a third transport module 5 described later.

A welding line of the to-be-welded battery 01 in the embodiments of this disclosure has a meaning commonly understood by those skilled in the art of this disclosure, including a portion of the top cap 011 for welding with the housing 012 and a portion of the housing 012 for welding with the top cap 011. Taking the housing 012 as an example, the welding line of the housing 012 is an edge of the opening, extending circumferentially along the opening to form a complete structure. For a rectangular-housing battery, a long-side welding line of the housing 012 is a portion of the welding line of the housing 012 extending along a length direction of the to-be-welded battery 01, and a short-side welding line of the top cap 011 is a portion of the welding line of the housing 012 extending along a width direction of the to-be-welded battery 01. The housing 012 has two long-side welding lines disposed opposite each other along the width direction of the to-be-welded battery 01. The housing 012 has two short-side welding lines disposed opposite each other along the length direction of the to-be-welded battery 01. The two long-side welding lines and the two short-side welding lines together enclose a closed rectangular structure. A long-side welding line of the top cap 011 is a portion of the welding line of the top cap 011 corresponding to the long-side welding line of the housing 012, and a short-side welding line of the top cap 011 is a portion of the welding line of the top cap 011 corresponding to the short-side welding line of the housing 012.

The cleaning processing submodule in the embodiments of this disclosure is capable of processing the to-be-welded battery 01 transported by the first transport module 1, that is, the cleaning processing submodule is capable of processing the to-be-welded battery 01 transported by a battery fixture of the first transport module 1. The battery fixture of the first transport module 1 remains in a clamping state and moves under the drive of the corresponding power mechanism to transport the battery. The same principle applies to a press-fitting processing submodule 4 being capable of processing the to-be-welded battery 01 transported by the second transport module 3, and a spot-welding processing submodule 6 being capable of processing the to-be-welded battery 01 transported by the third transport module 5, as described later.

With arrangement of the cleaning processing submodule, the cleaning processing submodule cleans the welding line, improving welding quality between the top cap 011 and the housing 012. Through the first transport module 1, the top cap 011 and the housing 012 are synchronously transported to the cleaning processing submodule, so that the cleaning processing submodule can clean the top cap 011 and the housing 012 together, improving production efficiency.

According to some embodiments of this disclosure, referring to FIG. 3, FIG. 4, and FIG. 5, the first transport module 1 includes a first battery fixture 11. The first battery fixture 11 includes a first insertion member 1111. In a case that the first battery fixture 11 clamps the to-be-welded battery 01, a first gap is present between the top cap 011 and the opening of the housing 012 in a thickness direction of the top cap 011. The first insertion member 1111 extends into the first gap and fits with the first gap.

The first battery fixture 11 in the embodiments of this disclosure refers to a battery fixture of the first transport module 1. The same principle applies to a second battery fixture 31 and a third battery fixture 51 described later. The second battery fixture 31 refers to a battery fixture of the second transport module 3, and the third battery fixture 51 refers to a battery fixture of the third transport module 5.

In the embodiments of this disclosure, the first insertion member 1111 extending into the first gap and fitting with the first gap means that the first insertion member 1111 is supported between the top cap 011 and an edge of the opening along the thickness direction of the top cap 011. The same principle applies to a second insertion member described later.

With arrangement of the first insertion member 1111, the first insertion member 1111 extends into a position between the top cap 011 and the housing 012, keeping a certain distance between the top cap 011 and the housing 012. In this way, the welding line of the top cap 011 and the welding line of the housing 012 can be well exposed, allowing the cleaning processing submodule to clean the welding lines.

According to some embodiments of this disclosure, referring to FIG. 3, FIG. 4, and FIG. 5, the first battery fixture 11 includes two oppositely disposed transport clamping arms 02. The two transport clamping arms 02 together form a clamping space to clamp an outer surface of the to-be-welded battery 01. The first insertion member 1111 is a protrusion formed on a surface of one of the two transport clamping arms 02 facing the other. The first insertion member 1111 is fixed to the corresponding transport clamping arm 02 and extends into the first gap along a direction in which the first insertion member 1111 protrudes relative to the corresponding transport clamping arm 02.

In the embodiments of this disclosure, the transport clamping arm 02 corresponding to the first insertion member 1111 is the transport clamping arm 02 on which the first insertion member 1111 is formed. It can be understood that a direction in which the first insertion member 1111 protrudes relative to the corresponding transport clamping arm 02 has an angle with a surface of the transport clamping arm 02 on which the first insertion member 1111 is formed, generally perpendicular to the surface of the transport clamping arm 02 on which the first insertion member 1111 is formed. That is, the direction in which the first insertion member 1111 protrudes relative to the corresponding transport clamping arm 02 is parallel to the first direction a.

The first insertion member 1111 is disposed on the transport clamping arm 02, and the first insertion member 1111 extends into the first gap along a direction in which the first insertion member 1111 protrudes relative to the corresponding transport clamping arm 02, making the structure of the first battery fixture 11 relatively simple, and facilitating the processing and manufacturing.

According to some embodiments of this disclosure, referring to FIG. 3, FIG. 4, and FIG. 5, the first battery fixture 11 includes two transport clamping arms 02 disposed opposite each other. The two transport clamping arms 02 together form a clamping space to clamp an outer surface of the to-be-welded battery 01. In a case that the first battery fixture 11 clamps the to-be-welded battery 01, an arrangement direction of the two transport clamping arms 02 of the first battery fixture 11 is consistent with a length direction of the to-be-welded battery 01. The first transport module 1 further includes a first power mechanism. The first power mechanism is capable of driving the first battery fixture 11 to move along the arrangement direction of the two transport clamping arms 02, to cause a long-side cleaning module to move relative to the to-be-welded battery 01 along a long-side welding line of the to-be-welded battery 01 to clean the long-side welding line.

The first power mechanism in the embodiments of this disclosure refers to a power mechanism of the first transport module 1. It can be understood that the first battery fixture 11 is disposed at an output end of the first power mechanism, so that the first power mechanism can drive the first battery fixture 11 to move, causing the first battery fixture 11 to transport the to-be-welded battery 01. The cleaning processing submodule is disposed at an output end of the first transport module 1 to clean a welding line of the to-be-welded battery 01 transported by the first battery fixture 11.

The first power mechanism in the embodiments of this disclosure is capable of driving the first battery fixture 11 to move along the arrangement direction of the two transport clamping arms 02. That is, in a case that the first battery fixture 11 clamps the to-be-welded battery 01, the first battery fixture 11 transports the to-be-welded battery 01 along the length direction of the to-be-welded battery 01, causing the long-side cleaning module and the to-be-welded battery 01 to move relative to each other in the length direction of the to-be-welded battery 01, thereby enabling the long-side cleaning module to move relative to the to-be-welded battery 01 along the long-side welding line of the to-be-welded battery 01 to clean the long-side welding line.

For ease of description, the transport clamping arms 02 of the first battery fixture 11 in the embodiments of this disclosure are referred to as short-side clamping arms 111. The two short-side clamping arms 111 move toward or away from each other under the drive of a short-side clamping cylinder 113 to clamp or release the to-be-welded battery 01.

The arrangement direction of the two transport clamping arms 02 are designed to be consistent with the length direction of the to-be-welded battery 01, that is, the two transport clamping arms 02 clamp short sides of the to-be-welded battery 01. The two transport clamping arms 02 are located on opposite sides of the to-be-welded battery 01 along the length direction of the to-be-welded battery 01, and the transport clamping arms 02 are not on a side of the long-side welding line far away from the interior of the housing 012 in the width direction of the to-be-welded battery 01. In this way, the long-side welding lines of the to-be-welded battery 01 can be well exposed, and the long-side welding lines are less likely to be obstructed by the first battery fixture 11 in the width direction of the to-be-welded battery 01, allowing the long-side cleaning module to effectively clean the long-side welding lines. The first power mechanism drives the first battery fixture 11 to move along the arrangement direction of the two transport clamping arms 02, enabling the long-side cleaning module to move relative to the to-be-welded battery 01 along the long-side welding lines of the to-be-welded battery 01, thereby improving the cleaning effect. In some embodiments of this disclosure, the long-side cleaning module may be an ultrasonic air knife.

According to some embodiments of this disclosure, referring to FIG. 3, FIG. 4, and FIG. 5, the first battery fixture 11 further includes two large-surface clamping arms 112 disposed opposite each other. The two large-surface clamping arms 112 together form a clamping space to clamp an outer surface of the to-be-welded battery 01. In a case that the first battery fixture 11 clamps the to-be-welded battery 01, the two large-surface clamping arms 112 are both located on a side of an opening of the housing 012 closer to an interior of the housing 012 in an axial direction of the opening, and a direction in which the two large-surface clamping arms 112 are disposed opposite each other is consistent with a width direction of the to-be-welded battery 01.

In a case that the first battery fixture 11 clamps the to-be-welded battery 01, the direction in which the two large-surface clamping arms 112 are disposed opposite each other is the width direction of the to-be-welded battery 01, that is, the two large-surface clamping arms 112 clamp the outer surface of the to-be-welded battery 01 along the width direction of the to-be-welded battery 01. Along the width direction of the to-be-welded battery 01, the two large-surface clamping arms 112 are respectively located on opposite sides of the to-be-welded battery 01, so that the to-be-welded battery 01 is clamped between the two large-surface clamping arms 112, improving the stability of clamping the to-be-welded battery 01 by the first battery fixture 11. In a case that the first battery fixture 11 clamps the to-be-welded battery 01, the two large-surface clamping arms 112 are both located on a side of the opening of the housing 012 closer to the interior of the housing 012, and the large-surface clamping arms 112 are not opposite the long-side welding lines in the width direction of the to-be-welded battery 01. The large-surface clamping arms 112 clamp the housing 012 and are less likely to obstruct the long-side welding lines of the to-be-welded battery 01, facilitating effective cleaning of the long-side welding lines.

According to some embodiments of this disclosure, referring to FIG. 3, FIG. 4, and FIG. 5, the two large-surface clamping arms 112 each include at least two large-surface sub-arms. The large-surface sub-arms of the two large-surface clamping arms 112 are disposed in a one-to-one correspondence. The corresponding large-surface sub-arms are disposed opposite each other, and the corresponding large-surface sub-arms together form a clamping space to clamp the outer surface of the to-be-welded battery 01. In a case that the to-be-welded battery 01 is clamped, a direction that the corresponding large-surface sub-arms are disposed opposite each other is the width direction of the to-be-welded battery 01, and the at least two large-surface sub-arms belonging to the same large-surface clamping arm 112 are arranged along the length direction of the to-be-welded battery 01. In this way, in a case that the large-surface clamping arms 112 clamp the to-be-welded battery 01, multiple large-surface sub-arms are arranged along the length direction of the to-be-welded battery 01, facilitating stable clamping for the to-be-welded battery 01. In some embodiments of this disclosure, the two large-surface clamping arms 112 each may include two large-surface sub-arms. In some embodiments of this disclosure, the two large-surface sub-arms belonging to a same large-surface clamping arm 112 may respectively clamp two ends of the to-be-welded battery 01 in the length direction.

According to some embodiments of this disclosure, referring to FIG. 3, FIG. 4, and FIG. 5, the first battery fixture 11 further includes a large-surface clamping cylinder 114. The large-surface clamping cylinder 114 is configured to drive the two large-surface clamping arms 112 to move toward or away from each other to clamp or release the to-be-welded battery 01.

According to some embodiments of this disclosure, referring to FIG. 3, FIG. 4, and FIG. 5, the first battery fixture 11 further includes a large-surface arm up-down cylinder 115. The large-surface arm up-down cylinder 115 is configured to drive the large-surface clamping arms 112 to move in a vertical direction g, so that the large-surface clamping arms 112 can rise relative to the short-side clamping arms 111 to clamp the to-be-welded battery 01, and descend while clamping the to-be-welded battery 01, allowing the to-be-welded battery 01 to descend between the two short-side clamping arms 111, and enabling the short-side clamping arms 111 to clamp the to-be-welded battery 01. Specifically, the two short-side clamping arms 111 are first placed in an open state, the large-surface clamping arms 112 rise to clamp the to-be-welded battery 01; then the large-surface clamping arms 112 descend while clamping the to-be-welded battery 01, causing the to-be-welded battery 01 to descend between the two short-side clamping arms 111; and subsequently, the short-side clamping arms 111 contract to clamp the to-be-welded battery 01. In some embodiments of this disclosure, an external device can clamp the to-be-welded battery 01 along the width direction, and the large-surface clamping arms 112 pick the to-be-welded battery 01 from the external device.

According to some embodiments of this disclosure, referring to FIG. 3, FIG. 4, and FIG. 5, the cleaning processing submodule includes a cleaning clamping tool. In a case that the cleaning clamping tool clamps the to-be-welded battery 01, the top cap 011 faces an opening of the housing 012 directly. A cleaner of the cleaning processing submodule is movably connected to the cleaning clamping tool, so that in a case that the cleaning clamping tool clamps the to-be-welded battery 01, the cleaner of the cleaning processing submodule is capable of moving along a welding line of the to-be-welded battery 01 to synchronously clean the top cap 011 and the housing 012.

In a case that the cleaning clamping tool clamps the to-be-welded battery 01, the top cap 011 faces the opening of the housing 012 directly, and the cleaner of the cleaning processing submodule can synchronously clean the top cap 011 and the housing 012 during movement along the welding line of the to-be-welded battery 01, improving cleaning efficiency.

According to some embodiments of this disclosure, referring to FIG. 3, FIG. 4, and FIG. 5, the cleaning clamping tool includes two cleaning clamping arms 21 disposed opposite each other along a second direction b. The two cleaning clamping arms 21 together form a clamping space to clamp an outer surface of the to-be-welded battery 01. In a case that the cleaning clamping tool clamps the to-be-welded battery 01, the second direction b is perpendicular to the axial direction of the opening, for example, being consistent with a width direction or a length direction of the to-be-welded battery 01. The two cleaning clamping arms 21 each span across the top cap 011 and the housing 012 of the to-be-welded battery 01 to clamp both the top cap 011 and the housing 012 along the second direction b. This allows for a simple structure of the cleaning clamping tool, with relatively stable clamping effect.

According to some embodiments of this disclosure, referring to FIG. 3, FIG. 4, and FIG. 5, the cleaning clamping tool includes a second insertion member. In a case that the cleaning clamping tool clamps the to-be-welded battery 01, a second gap is present between the top cap 011 and the opening 012 in the thickness direction of the top cap 011. The second insertion member extends into the second gap and fits with the second gap.

With arrangement of the second insertion member, the second insertion member extends into a position between the top cap 011 and the housing 012, keeping a certain distance between the top cap 011 and the housing 012. In this way, the welding line of the top cap 011 and the welding line of the housing 012 can be well exposed, allowing the cleaning processing submodule to clean the welding lines.

According to some embodiments of this disclosure, referring to FIG. 3, FIG. 4, and FIG. 5, the second insertion member is a protrusion formed on a surface of one of the two cleaning clamping arms 21 facing the other. The second insertion member is fixed to a corresponding cleaning clamping arm 21 and extends into the second gap along a direction in which the second insertion member protrudes relative to the corresponding cleaning clamping arm 21.

The second insertion member is disposed on the cleaning clamping arm 21, and the second insertion member extends into the second gap along the direction in which the second insertion member protrudes relative to the corresponding cleaning clamping arm 21, making the structure of the cleaning clamping tool relatively simple, and facilitating the processing and manufacturing.

According to some embodiments of this disclosure, referring to FIG. 3, FIG. 4, and FIG. 5, the cleaning processing submodule includes a short-side cleaning processing submodule 2. The short-side cleaning processing submodule 2 includes a short-side cleaning clamping tool. In a case that the short-side cleaning clamping tool clamps the to-be-welded battery 01, an arrangement direction of the two cleaning clamping arms 21 of the short-side cleaning clamping tool is consistent with the width direction of the to-be-welded battery 01.

In the embodiments of this disclosure, the short-side cleaning clamping tool is a clamping tool of the short-side cleaning processing submodule 2. When the short-side cleaning clamping tool is in a clamping state, the short-side cleaning clamping tool remains at a certain position relative to a processing unit of the short-side cleaning clamping tool, namely a short-side cleaner 22, so that the to-be-welded battery 01 remains at a certain position relative to the short-side cleaner 22, enabling the short-side cleaner 22 to clean a short-side welding line of the to-be-welded battery 01. For example, the short-side cleaner 22 may be an ultrasonic air knife or the like.

The two cleaning clamping arms 21 clamp the outer surface of the to-be-welded battery 01 along the width direction of the to-be-welded battery 01, and the two cleaning clamping arms 21 each span across the top cap 011 and the housing 012 of the to-be-welded battery 01 to maintain the relative positions of the top cap 011 and the housing 012. This makes a simple structure of the battery fixture, allowing the to-be-welded battery 01 to be clamped with fewer clamping arms while ensuring a stable clamping effect on the to-be-welded battery 01. Furthermore, the two cleaning clamping arms 21 clamp the outer surface of the to-be-welded battery 01 along the width direction of the to-be-welded battery 01, so that the two cleaning clamping arms 21 do not obstruct short-side welding lines of the top cap 011 and the housing 012, facilitating the cleaning by a short-side cleaning module. Additionally, in a case that the short-side cleaning clamping tool clamps the to-be-welded battery 01 and moves to a processing module, the top cap 011 faces the opening of the housing 012, making it easy for the short-side cleaning processing submodule 2 to clean the top cap 011 of the housing 012 together.

It can be understood that since the short-side clamping arms 111 are configured to clamp short sides of the to-be-welded battery 01, and the cleaning clamping arms 21 clamp the to-be-welded battery 01 in the width direction of the to-be-welded battery 01, the transport clamping arms 02 are less likely to interfere with the cleaning clamping arms 21, enabling the first battery fixture 11 and the cleaning clamping tool to conveniently jointly clamp the to-be-welded battery 01. Furthermore, since the large-surface clamping arms 112 are located on a side closer to the interior of the housing 012 in the axial direction of the opening, and the cleaning clamping arms 21 span across the top cap 011 and the housing 012 of the to-be-welded battery 01, the cleaning clamping arms 21 can be conveniently staggered with the large-surface clamping arms 112, enabling the first battery fixture 11 and the cleaning clamping tool to conveniently jointly clamp the to-be-welded battery 01. In some embodiments of this disclosure, in a case that the first battery fixture 11 and the cleaning clamping tool jointly clamp the to-be-welded battery 01, the large-surface clamping arms 112 and the cleaning clamping arms 21 can be arranged along the length direction of the to-be-welded battery 01.

According to some embodiments of this disclosure, referring to FIG. 3, FIG. 4, and FIG. 5, the two cleaning clamping arms 21 each include at least two cleaning sub-arms. The cleaning sub-arms of the two cleaning clamping arms 21 are disposed in a one-to-one correspondence. The corresponding cleaning sub-arms are disposed opposite each other, and the corresponding cleaning sub-arms together form a clamping space to clamp the outer surface of the to-be-welded battery 01. In a case that the to-be-welded battery 01 is clamped, a direction in which the corresponding cleaning sub-arms are disposed opposite each other is the width direction of the to-be-welded battery 01, and the at least two cleaning sub-arms belonging to a same cleaning clamping arm 21 are arranged along the length direction of the to-be-welded battery 01. In this way, in a case that the cleaning clamping arm 21 clamps the to-be-welded battery 01, multiple cleaning sub-arms are arranged along the length direction of the to-be-welded battery 01, allowing for stable clamping of the to-be-welded battery 01. In some embodiments of this disclosure, the two cleaning clamping arms 21 each may include two cleaning sub-arms. In some embodiments of this disclosure, two cleaning sub-arms belonging to a same cleaning clamping arm 21 may be configured to respectively clamp two ends of the to-be-welded battery 01 in the length direction.

According to some embodiments of this disclosure, referring to FIG. 3, FIG. 6, FIG. 7, and FIG. 8, the battery top cap welding system includes a second transport module 3. A short-side cleaning processing submodule 2 is disposed at an input end of the second transport module 3, to enable the second transport module 3 to transport the to-be-welded battery 01 through the short-side cleaning processing submodule 2. Two transport clamping arms 02 of a battery fixture of the second transport module 3 are disposed opposite each other along a second direction b. The two transport clamping arms 02 together form a clamping space to clamp an outer surface of the to-be-welded battery 01. The two cleaning clamping arms 21 are configured to clamp a third portion of the to-be-welded battery 01, and the two transport clamping arms 02 of the second transport module 3 are configured to clamp a fourth portion of the to-be-welded battery 01. The third portion and the fourth portion are arranged along the length direction of the to-be-welded battery 01, to enable the cleaning clamping arms 21 and the transport clamping arms 02 of the second transport module 3 to jointly clamp the outer surface of the to-be-welded battery 01.

In the embodiments of this disclosure, the second transport module 3 being capable of transporting the to-be-welded battery 01 through the short-side cleaning processing submodule 2 means that a battery fixture of the second transport module 3 can pick the battery from the cleaning processing submodule and, while maintaining a picking state, move under the drive of a power mechanism of the second transport module 3, thereby transporting the battery.

In the embodiments of this disclosure, the two transport clamping arms 02 of the battery fixture of the second transport module 3 are disposed opposite each other along the second direction b. That is, in a case that the battery fixture of the second transport module 3 clamps the to-be-welded battery 01, an arrangement direction of the two transport clamping arms 02 of the battery fixture of the second transport module 3 is consistent with the width direction of the to-be-welded battery 01, allowing for clamping of the to-be-welded battery 01 along the width direction.

The two transport clamping arms 02 of the battery fixture of the second transport module 3 are disposed opposite each other along the second direction b to together form a clamping space to clamp the outer surface of the to-be-welded battery 01. In this way, the two transport clamping arms 02 can clamp the outer surface of the to-be-welded battery 01 along the width direction of the to-be-welded battery 01, resulting in a relatively stable clamping effect. The cleaning clamping arms 21 and the transport clamping arms 02 of the second transport module 3 jointly clamp the outer surface of the to-be-welded battery 01, so that during the process of transferring the to-be-welded battery 01 through the cleaning clamping arms 21 to the transport clamping arms 02 of the second transport module 3, the transport clamping arms 02 of the second transport module 3 can accurately and stably clamp the to-be-welded battery 01, and the relative positions of the top cap 011 and the housing 012 do not change much. Additionally, the third portion and the fourth portion are arranged along the length direction of the to-be-welded battery 01, so that when the cleaning clamping arms 21 and the transport clamping arms 02 of the second transport module 3 are clamping the to-be-welded battery 01, they can have a large contact area with the to-be-welded battery 01, improving clamping stability.

For ease of description, the transport clamping arms 02 of the second battery fixture 31 are hereinafter referred to as press-fitting transport clamping arms 311. In some embodiments of this disclosure, each press-fitting transport clamping arm 311 includes at least one press-fitting transport sub-arm. The press-fitting transport sub-arms of the two press-fitting transport clamping arms 311 are disposed in a one-to-one correspondence. The corresponding press-fitting transport sub-arms are disposed opposite each other to together form a clamping space to clamp the outer surface of the to-be-welded battery 01. In a case that the to-be-welded battery 01 is clamped, a direction in which the corresponding press-fitting transport sub-arms are disposed opposite each other is the width direction of the to-be-welded battery 01, and the at least two press-fitting transport sub-arms belonging to a same press-fitting transport clamping arm 311 are arranged along the length direction. In this way, in a case that the press-fitting transport clamping arm 311 clamps the to-be-welded battery 01, multiple press-fitting transport sub-arms are arranged along the length direction of the to-be-welded battery 01, allowing for more stable clamping of the to-be-welded battery 01. In some embodiments of this disclosure, the two press-fitting transport clamping arms 311 each may include two press-fitting transport sub-arms. In some embodiments of this disclosure, the two press-fitting transport sub-arms belonging to a same press-fitting transport clamping arm 311 may respectively clamp two ends of the to-be-welded battery 01 in the length direction.

According to some embodiments of this disclosure, referring to FIG. 3, FIG. 6, FIG. 7, and FIG. 8, the two cleaning sub-arms belonging to a same cleaning clamping arm 21 can be configured to respectively clamp two ends of the to-be-welded battery 01 in the length direction of the to-be-welded battery 01, and the press-fitting transport clamping arm 311 is located between the two cleaning sub-arms. In this way, the third portion and the fourth portion are arranged along the length direction of the to-be-welded battery 01, enabling the cleaning clamping arm 21 and the press-fitting transport clamping arm 311 to jointly clamp the outer surface of the to-be-welded battery 01.

According to some embodiments of this disclosure, referring to FIG. 3, FIG. 6, FIG. 7, and FIG. 8, the battery top cap welding system includes a second transport module 3 and a press-fitting processing submodule 4. The press-fitting processing submodule 4 is disposed at an output end of the second transport module 3 to process the to-be-welded battery 01 transported by the second transport module 3. The press-fitting processing submodule 4 includes a pressing component 41. The pressing component 41 is configured to apply a force toward the housing 012 to the top cap 011 along the height direction of the to-be-welded battery 01 to press-fit the to-be-welded battery 01.

In the embodiments of this disclosure, press-fitting has a meaning commonly understood by those skilled in the art of this disclosure. That is, in a case that the top cap 011 faces the housing 012 directly, a force toward the housing 012 is applied to the top cap 011 along the height direction of the to-be-welded battery 01, causing the top cap 011 to embed into the opening.

With arrangement of the second transport module 3, the top cap 011 and the housing 012 can be synchronously transported to the press-fitting processing submodule 4, so that the press-fitting processing submodule 4 press-fits the to-be-welded battery 01, improving production efficiency.

According to some embodiments of this disclosure, referring to FIG. 3, FIG. 6, FIG. 7, and FIG. 8, a clamping tool of the press-fitting processing submodule 4 includes: two first press-fitting clamping arms 42 disposed opposite each other along a third direction c, where the two first press-fitting clamping arms 42 together form a clamping space to clamp an outer surface of the to-be-welded battery 01; and two second press-fitting clamping arms 43 disposed opposite each other along a fourth direction d, where the two second press-fitting clamping arms 43 together form a clamping space to clamp an outer surface of the to-be-welded battery 01. In a case that the clamping tool clamps the to-be-welded battery 01, the top cap 011 faces an opening of the housing 012 directly, the third direction c and the fourth direction d are respectively consistent with the length direction and the width direction of the to-be-welded battery 01, and the two first press-fitting clamping arms 42 and the two second press-fitting clamping arms 43 each span across the top cap 011 and the housing 012 of the to-be-welded battery 01 to clamp both the top cap 011 and the housing 012 along the third direction c and the fourth direction d, respectively.

The first press-fitting clamping arms 42 and the second press-fitting clamping arms 43 clamp the outer surface of the to-be-welded battery 01 along the length direction and the width direction of the to-be-welded battery 01, respectively, and the two first press-fitting clamping arms 42 and the two second press-fitting clamping arms 43 each span across the top cap 011 and the housing 012 of the to-be-welded battery 01. This makes a simple structure of the clamping tool of the press-fitting processing submodule 4, allowing the to-be-welded battery 01 to be clamped with fewer clamping arms while ensuring a stable clamping effect on the to-be-welded battery 01. Additionally, the to-be-welded battery 01 is positioned in both the length direction and the width direction, allowing for accurate and stable positioning of the to-be-welded battery 01, and facilitating the press-fitting process.

According to some embodiments of this disclosure, referring to FIG. 3, FIG. 6, FIG. 7, and FIG. 8, the first press-fitting clamping arms 42 and the second press-fitting clamping arms 43 may be made of silicone material. This helps to reduce the damage to the outer surface of the to-be-welded battery 01 caused by the first press-fitting clamping arms 42 and the second press-fitting clamping arms 43 during a press-fitting process.

According to some embodiments of this disclosure, referring to FIG. 3, FIG. 6, FIG. 7, and FIG. 8, the press-fitting processing submodule 4 further includes a fifth frame 44. The two first press-fitting clamping arms 42 are each slidably connected to the fifth frame 44 along the third direction c to move toward or away from each other in the third direction c to clamp or release the to-be-welded battery 01. The two second press-fitting clamping arms 43 are each slidably connected to the fifth frame 44 along the fourth direction d to move toward or away from each other in the fourth direction d to clamp or release the to-be-welded battery 01. This results in a relatively simple structure that is easy to implement.

According to some embodiments of this disclosure, referring to FIG. 6 and FIG. 9, the battery top cap welding system includes a third transport module 5. The press-fitting processing submodule 4 is disposed at an input end of the third transport module 5, to enable the third transport module 5 to transport the to-be-welded battery 01 through the press-fitting processing submodule 4. A battery fixture of the third transport module 5 includes a pressing member 511. The pressing member 511 is configured to apply a force toward the housing 012 onto the top cap 011, to maintain the top cap 011 in a press-fitting position.

In the embodiments of this disclosure, the pressing member 511 is configured to apply a force toward the housing 012 onto the top cap 011, to maintain the top cap 011 within the opening, that is, after press-fitting, the top cap 011 is embedded into the opening. The pressing member 511 applies a force toward the housing 012 onto the top cap 011, to maintain the top cap 011 embedded at a position in the opening during a process of the third transport module 5 transporting the to-be-welded battery 01.

With arrangement of the pressing member 511, the pressing member 511 applies a force toward the housing 012 onto the top cap 011, which ensures that the relative positions of the top cap 011 and the housing 012 in the width direction of the top cap 011 do not change much during transportation of the to-be-welded battery 01 after press-fitting processing, facilitating subsequent processing of the to-be-welded battery 01.

In some embodiments of this disclosure, in a case that two transport clamping arms 02 of a battery fixture of the third transport module 5 clamp the to-be-welded battery 01, a direction in which the two transport clamping arms 02 are disposed opposite each other is consistent with the width direction of the to-be-welded battery 01. In this way, the battery fixture of the third transport module 5 is less likely to interfere with a clamping tool of the press-fitting processing submodule 4.

According to some embodiments of this disclosure, referring to FIG. 6, FIG. 9, FIG. 16, and FIG. 17, a battery fixture of the third transport module 5 includes two transport clamping arms 02. The two transport clamping arms 02 are disposed opposite each other, and the two transport clamping arms 02 together form a clamping space to clamp an outer surface of the to-be-welded battery 01. The pressing member 511 is slidably connected to the transport clamping arm 02. In a case that the two transport clamping arms 02 clamp an outer surface of the to-be-welded battery 01, a direction in which the two transport clamping arms 02 are disposed opposite each other is perpendicular to the axial direction of the opening of the housing 012, for example, being consistent with the width direction or the length direction of the to-be-welded battery 01, and a direction in which the pressing member 511 slides relative to the transport clamping arm 02 is consistent with the height direction of the to-be-welded battery 01, to enable the pressing member 511 to apply a force toward the housing 012 onto the top cap 011.

In the embodiments of this disclosure, the battery fixture of the third transport module 5 is a third battery fixture 51. For ease of description, the transport clamping arms 02 of the third battery fixture 51 are referred to as spot-welding transport clamping arms 512.

With the pressing member 511 disposed on the transport clamping arm 02, the pressing member 511 is slidably connected to the transport clamping arm 02, facilitating a compact structure.

According to some embodiments of this disclosure, referring to FIG. 6, FIG. 9, FIG. 16, and FIG. 17, the third battery fixture 51 further includes a pressing member driving cylinder 55. The pressing member driving cylinder 55 is configured to drive the pressing member 511 to slide relative to the transport clamping arm 02, enabling the pressing member 511 to apply a force toward the housing 012 onto the top cap 011.

According to some embodiments of this disclosure, referring to FIG. 6, FIG. 9, FIG. 16, and FIG. 17, the third battery fixture 51 further includes a spot-welding transport clamping cylinder 56. The spot-welding transport clamping cylinder 56 is configured to drive the two spot-welding transport clamping arms 512 to move toward or away from each other to clamp or release the to-be-welded battery 01.

According to some embodiments of this disclosure, referring to FIG. 6, FIG. 9, FIG. 16, and FIG. 17, each transport clamping arm 02 is provided with a pressing member 511. This structural form helps maintain the relative positions of the top cap 011 and the housing 012 effectively. In some embodiments of this disclosure, each transport clamping arm 02 may include at least two transport sub-arms, and on this basis, each transport sub-arm may be provided with the pressing member 511, helping maintain the relative positions of the top cap 011 and the housing 012 effectively.

According to some embodiments of this disclosure, referring to FIG. 6, FIG. 9, FIG. 16, and FIG. 17, the battery top cap welding system includes a third transport module 5 and a press-fitting processing submodule 4. The press-fitting processing submodule 4 is disposed at an input end of the third transport module 5, to enable the third transport module 5 to transport the to-be-welded battery 01 through the press-fitting processing submodule 4. A battery fixture of the third transport module 5 includes a first support member 513. The first support member 513 is configured to support a side of the housing 012 far away from the top cap 011, to enable the pressing component 41 to press-fit the to-be-welded battery 01.

The first support member 513 of the battery fixture of the third transport module 5 provides support, enabling the pressing component 41 to press-fit the to-be-welded battery 01. This helps to utilization of the battery fixture of the third transport module 5 and simplify the structure. Additionally, the first support member 513 of the battery fixture of the third transport module 5 provides support, helping to reduce the time required for one cycle of the third transport module 5. Appropriately increasing the time required for one cycle of the third transport module 5 is conducive to ensuring consistency of production rhythm, improving production efficiency.

According to some embodiments of this disclosure, referring to FIG. 6, FIG. 9, FIG. 16, and FIG. 17, the second transport module 3 can first transport the to-be-welded battery 01 to the press-fitting processing submodule 4, a clamping tool of the press-fitting processing submodule 4 clamps the to-be-welded battery 01 to position the to-be-welded battery 01, and then the first support member 513 supports the to-be-welded battery 01, enabling the pressing component 41 to press-fit the to-be-welded battery 01.

According to some embodiments of this disclosure, referring to FIG. 6, FIG. 9, FIG. 16, and FIG. 17, the battery top cap welding system includes a third transport module 5 and a spot-welding processing submodule 6. The spot-welding processing submodule 6 is disposed at an output end of the third transport module 5, to enable the spot-welding processing submodule 6 to spot weld the top cap 011 transported by the third transport module 5 to the housing 012.

Through the third transport module 5, the top cap 011 and the housing 012 are synchronously transported to the spot-welding processing submodule 6 for spot welding of the top cap 011 and the housing 012, improving production efficiency.

According to some embodiments of this disclosure, referring to FIG. 6, FIG. 9, FIG. 16, and FIG. 17, a clamping tool of the spot-welding processing submodule 6 includes a first reference platform 611. The first reference platform 611 is configured to apply a force toward the housing 012 onto the top cap 011 along the height direction of the to-be-welded battery 01, to maintain the top cap 011 in the press-fitting position and enable the spot-welding processing submodule 6 to spot weld the to-be-welded battery 01. In a case that a battery fixture of the third transport module 5 clamps the to-be-welded battery 01, the top cap 011 is at least partially exposed outside a clamping cavity of the battery fixture, to enable the first reference platform 611 to abut against the top cap 011.

In the embodiments of this disclosure, a reference platform has a constant relative posture with respect to a processing unit of the spot-welding processing submodule 6, namely a spot-welding welder 63. In this way, when the to-be-welded battery 01 comes into contact with the first reference platform 611, the to-be-welded battery 01 is in an appropriate posture relative to the first reference platform 611, guaranteeing a posture of the to-be-welded battery 01 relative to the spot-welding welder 63, thereby facilitating the welding by the spot-welding welder 63.

Through the first reference platform 611, the relative positions of the top cap 011 and the housing 012 can be well ensured, improving spot welding quality. In a case that the battery fixture of the third transport module 5 clamps the to-be-welded battery 01, the first reference platform 611 can abut against the top cap 011, so that in a case that the to-be-welded battery 01 is transferred from the third transport module 5 to the clamping tool of the spot-welding processing submodule 6, the relative positions of the top cap 011 and the housing 012 do not change much, improving spot welding quality.

According to some embodiments of this disclosure, referring to FIG. 6, FIG. 9, FIG. 16, and FIG. 17, in a case that the first reference platform 611 abuts against the top cap 011, the first reference platform 611 shields poles of the battery. This helps reduce the damage to the poles during a spot welding process.

According to some embodiments of this disclosure, referring to FIG. 6, FIG. 9, FIG. 16, and FIG. 17, a clamping tool of the spot-welding processing submodule 6 includes: two first spot-welding clamping arms 612 disposed opposite each other along a fifth direction e, where the two first spot-welding clamping arms 612 together form a clamping space to clamp an outer surface of the to-be-welded battery 01; and two second spot-welding clamping arms disposed opposite each other along a sixth direction f, where the two second spot-welding clamping arms together form a clamping space to clamp an outer surface of the to-be-welded battery 01. In a case that the clamping tool clamps the to-be-welded battery 01, the top cap 011 faces an opening of the housing 012 directly, and the fifth direction e and the sixth direction f are respectively consistent with the length direction and the width direction of the to-be-welded battery 01.

For ease of description, a clamping tool of the spot-welding processing submodule 6 in the embodiments of this disclosure is referred to as a spot-welding clamping tool 61.

The first spot-welding clamping arms 612 and the second spot-welding clamping arms clamp the outer surface of the to-be-welded battery 01 along the length direction and the width direction of the to-be-welded battery 01, respectively, allowing the to-be-welded battery 01 to be accurately and stably positioned in both the length direction and the width direction, improving spot welding quality.

During a process of transferring the to-be-welded battery 01 from the third transport module 5 to the spot-welding clamping tool 61, in a case that the third battery fixture 51 clamps the to-be-welded battery 01, the reference platform comes into contact with the top cap 011 of the to-be-welded battery 01, then the first spot-welding clamping arms 612 and the second spot-welding clamping arms clamp the to-be-welded battery 01, and subsequently the third battery fixture 51 releases the to-be-welded battery 01, thereby implementing transfer of the to-be-welded battery 01.

According to some embodiments of this disclosure, referring to FIG. 6, FIG. 9, FIG. 16, and FIG. 17, the spot-welding clamping tool 61 further includes a first spot-welding clamping cylinder 613. The first spot-welding clamping cylinder 613 is configured to drive the two first spot-welding clamping arms 612 to move toward or away from each other to clamp or release the to-be-welded battery 01. In some embodiments of this disclosure, the spot-welding clamping tool 61 further includes a second spot-welding clamping cylinder 614. The second spot-welding clamping cylinder 614 is configured to drive the two second spot-welding clamping arms to move toward or away from each other to clamp or release the to-be-welded battery 01.

According to some embodiments of this disclosure, referring to FIG. 9, FIG. 16, FIG. 17, and FIG. 18, the spot-welding processing submodule 6 includes a step detection mechanism 62. The spot-welding processing submodule 6 further includes a first frame. The first frame is fixed relative to the step detection mechanism 62, and the spot-welding clamping tool 61 is slidably connected to the first frame, to enable the step detection mechanism 62 to move relative to the to-be-welded battery 01 along the welding line of the to-be-welded battery 01 and perform step detection on the to-be-welded battery 01. In some embodiments of this disclosure, the spot-welding clamping tool 61 may be slidably connected to the first frame along a horizontal direction. This arrangement is easy to implement with a relatively simple structure.

The clamping tool slides with the first frame, so that the step detection mechanism 62 can move relative to the to-be-welded battery 01 along the welding line of the to-be-welded battery 01 for step detection, improving detection accuracy. Spot welding is performed after step detection on the to-be-welded battery 01, improving welding accuracy.

According to some embodiments of this disclosure, referring to FIG. 9, FIG. 16, FIG. 17, and FIG. 18, when the spot-welding clamping tool 61 is in a state of clamping the to-be-welded battery 01, the clamping tool can move relative to the first frame to a position corresponding to the spot-welding welder 63. During the movement process, the step detection mechanism 62 performs step detection on the to-be-welded battery 01. If the detection succeeds, the clamping tool moves relative to the first frame to a position corresponding to the spot-welding welder 63, enabling the spot-welding welder 63 to weld the to-be-welded battery 01. If the detection fails, the to-be-welded battery 01 skips spot welding.

According to some embodiments of this disclosure, referring to FIG. 9, FIG. 16, FIG. 17, and FIG. 18, the spot-welding welder 63 can be fixed relative to the first frame. When the spot-welding clamping tool 61 is in a state of clamping the to-be-welded battery 01, the spot-welding clamping tool 61 can move relative to the first frame, to enable the spot-welding clamping tool 61 to move relative to the welding line of the to-be-welded battery 01 and perform spot welding at multiple positions of the to-be-welded battery 01. In some embodiments of this disclosure, the spot-welding welder 63 can perform welding through galvanometer-based laser emission.

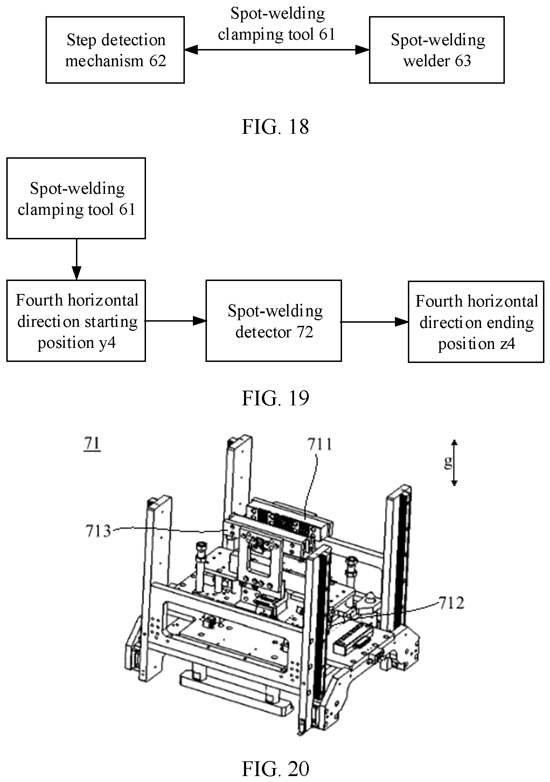

According to some embodiments of this disclosure, referring to FIG. 19 and FIG. 20, the battery top cap welding system further includes a spot-welding detector 72 and a spot-welding detection transport mechanism 71. An input end of the spot-welding detection transport mechanism 71 is connected to the spot-welding processing submodule 6, and an output end is connected to the spot-welding detector 72, to transport the to-be-welded battery 01 from the spot-welding processing submodule 6 to the spot-welding detector 72. The spot-welding detector can inspect processing quality of the spot-welding processing submodule 6, improving processing quality.

According to some embodiments of this disclosure, referring to FIG. 19 and FIG. 20, the spot-welding detection transport mechanism 71 includes two detection clamping arms 711. The two spot-welding detection clamping arms are configured to clamp the to-be-welded battery 01 along the width direction of the to-be-welded battery 01. In a clamping state, the detection clamping arms 711 can move under a force, such as being driven by a conveyor line, to move from the spot-welding processing submodule 6 to the spot-welding detector 72. This ensures stable transportation of the to-be-welded battery 01 by the spot-welding detection transport mechanism 71.

According to some embodiments of this disclosure, referring to FIG. 19 and FIG. 20, in a case that the two detection clamping arms 711 clamp the to-be-welded battery 01, an arrangement direction of the two detection clamping arms 711 is a horizontal direction. The spot-welding detection transport mechanism 71 further includes a bottom support member. In a case that the two detection clamping arms 711 clamp the to-be-welded battery 01, the bottom support member is configured to support a lower side surface of the to-be-welded battery 01 along the vertical direction g. This ensures stable transportation of the to-be-welded battery 01 by the spot-welding detection transport mechanism 71. In some embodiments of this disclosure, the two detection clamping arms 711 each may be slidably connected to the bottom support member along the arrangement direction to move toward or away from each other to clamp or release the to-be-welded battery 01. This results in a relatively simple structure of the spot-welding detection transport mechanism 71.

According to some embodiments of this disclosure, referring to FIG. 19 and FIG. 20, the spot-welding detection transport mechanism 71 further includes a detection clamping cylinder 712. The detection clamping cylinder 712 is configured to drive the two detection clamping arms 711 to move toward or away from each other to clamp or release the to-be-welded battery 01.

According to some embodiments of this disclosure, referring to FIG. 19 and FIG. 20, the spot-welding processing submodule 6 and the spot-welding detector 72 are arranged along a horizontal direction. The detection clamping arms 711 can move along the horizontal direction under a force to respectively move to positions level with the spot-welding processing submodule 6 and the spot-welding detector 72 along an arrangement direction of the spot-welding processing submodule 6 and the spot-welding detector 72, to transport the to-be-welded battery 01 from the spot-welding processing submodule 6 to the spot-welding detector 72. This results in a relatively simple structure that is easy to implement. Generally, the detection clamping arms 711 can move along the horizontal direction under a force to respectively move to positions level with the spot-welding welder 63 and the spot-welding detector 72 along an arrangement direction of the spot-welding welder 63 and the spot-welding detector 72, to transport the to-be-welded battery 01 from the spot-welding processing submodule 6 to the spot-welding detector 72.

According to some embodiments of this disclosure, referring to FIG. 19 and FIG. 20, the spot-welding detector 72 is disposed on a side of the spot-welding processing submodule 6 far away from the press-fitting processing submodule 4 along the horizontal direction. This layout is relatively reasonable and helps reduce space occupation.

According to some embodiments of this disclosure, referring to FIG. 19 and FIG. 20, the spot-welding detection transport mechanism 71 further includes a detection lifting mechanism 82. A first end of the detection lifting mechanism 82 is fixed relative to the spot-welding clamping tool 61 in the vertical direction g, and a second end, namely an output end, can move in the vertical direction g relative to the first end of the detection lifting mechanism 82. The detection clamping arms 711 are disposed at the output end of the detection lifting mechanism 82, so that in a case of moving to a position level with the spot-welding processing submodule 6, the detection clamping arms 711 can move upward under a driving action of the detection lifting mechanism 82 to a position corresponding to the spot-welding clamping tool 61 to pick the to-be-welded battery 01 from the spot-welding clamping tool 61. In this way, during a process of the detection clamping arms 711 moving along the horizontal direction, the output end of the detection lifting mechanism 82 can be at a relatively low position, effectively reducing the risk of interference between the detection clamping arms 711 and the detection clamping tool. In a case that the detection clamping arms 711 move along the horizontal direction to a position level with the spot-welding clamping tool 61, the output end of the detection lifting mechanism 82 lifts the detection clamping arms 711, enabling the detection clamping arms 711 to pick the to-be-welded battery 01 from the spot-welding clamping tool 61.

According to some embodiments of this disclosure, referring to FIG. 19 and FIG. 20, during a process of transporting the to-be-welded battery 01, the detection clamping arms 711 can first receive material at the spot-welding clamping tool 61, then the detection lifting mechanism 82 contracts, driving the detection clamping arms 711 to descend to a fourth horizontal direction starting position y4 directly below the spot-welding clamping tool 61. Subsequently, while the detection lifting mechanism 82 remains contracted, the detection clamping arms 711 move along the horizontal direction to the spot-welding detector 72 and a fourth horizontal direction ending position z4 sequentially. The detection clamping arms 711 open at the fourth horizontal direction ending position z4, and a four-axis robotic arm picks the to-be-welded battery 01.

According to some embodiments of this disclosure, referring to FIG. 19 and FIG. 20, for a process of the detection clamping arms 711 transporting the to-be-welded battery 01 from the spot-welding clamping tool 61, reference may be made to FIG. 18. First, the detection clamping arms 711 receive material at the spot-welding clamping tool 61, then the detection lifting mechanism 82 contracts, driving the detection clamping arms 711 to descend to a fourth horizontal direction starting position directly below the spot-welding clamping tool 61. Subsequently, while the detection lifting mechanism 82 remains contracted, the detection clamping arms 711 move a horizontal direction to the spot-welding detector 72 for detection by the spot-welding detector 72, and then continue to move along this direction to a fourth horizontal direction ending position. In a case that the detection clamping arms 711 are at the fourth horizontal direction ending position, an articulated robotic arm can pick material from the detection clamping arms 711 and transport the material to another position.

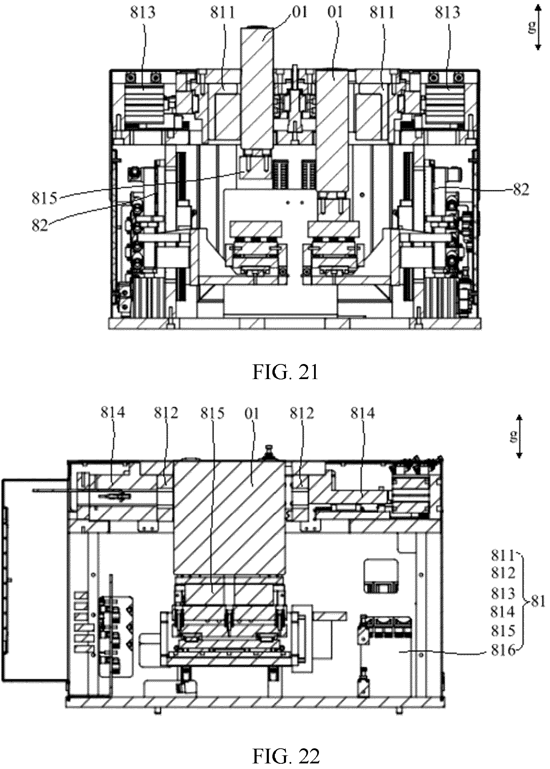

According to some embodiments of this disclosure, referring to FIG. 21 and FIG. 22, the battery top cap welding system further includes a full-welding module and a full-welding transport module. An input end of the full-welding transport module is connected to the spot-welding processing submodule 6, and an output end is connected to the full-welding module, to transport the to-be-welded battery 01 from the spot-welding processing submodule 6 to the full-welding module.

The full-welding transport module transports the to-be-welded battery 01 from the spot-welding processing submodule 6 to the full-welding module, so that full-welding processing and spot-welding processing of the to-be-welded battery 01 are integrated into one production line, improving production efficiency.

According to some embodiments of this disclosure, referring to FIG. 21 and FIG. 22, the full-welding module includes a full-welding clamping tool 81. The full-welding clamping tool 81 includes a clamping mechanism and a second support member 815. The clamping mechanism includes two full-welding clamping arms oppositely disposed along a horizontal direction. The two full-welding clamping arms together form a clamping space to clamp an outer surface of the to-be-welded battery 01. Along a direction in which the two full-welding clamping arms are disposed opposite each other, the second support member 815 is located between the two full-welding clamping arms and is configured to support the to-be-welded battery 01 located within the two full-welding clamping arms along a vertical direction g.

The second support member 815 supports the to-be-welded battery 01, and the clamping mechanism clamps the outer surface of the to-be-welded battery 01 along the horizontal direction, allowing the to-be-welded battery 01 to be stably clamped and accurately positioned, thereby improving welding quality.

According to some embodiments of this disclosure, referring to FIG. 21 and FIG. 22, the full-welding transport module includes a spot-welding detection transport mechanism 71 and a first articulated robotic arm. The first articulated robotic arm is configured to transport the to-be-welded battery 01 from the spot-welding detection transport mechanism 71 to the full-welding clamping tool 81. In some embodiments of this disclosure, the first articulated robotic arm may be a four-axis robotic arm or the like.

According to some embodiments of this disclosure, referring to FIG. 21 and FIG. 22, the first articulated robotic arm may be disposed along a horizontal direction on a side of the spot-welding detector 72 far away from the spot-welding processing submodule 6. In this way, during a process of the first articulated robotic arm picking the to-be-welded battery 01 from the spot-welding detection transport mechanism 71, interference with the spot-welding detector 72 is less likely to occur.

According to some embodiments of this disclosure, referring to FIG. 21 and FIG. 22, the spot-welding detection transport mechanism 71 can transport batteries synchronously with a battery fixture, which means a time required for the detection clamping arms 711 to move from the spot-welding processing submodule 6 to the first articulated robotic arm is the same as a time required for the battery fixture to move from one of two adjacent processing modules to another, thereby improving production efficiency.

According to some embodiments of this disclosure, referring to FIG. 21 and FIG. 22, the full-welding clamping tool 81 further includes a second frame. The two full-welding clamping arms are movably connected to the second frame, such as being slidably connected to the second frame along a direction in which the two full-welding clamping arms are disposed opposite each other, to clamp or release the to-be-welded battery 01. The second support member 815 is slidably connected to the frame along a vertical direction g to rise to a target position to support the to-be-welded battery 01 transported by the full-welding transport module, and drive the to-be-welded battery 01 to descend to a position between the two full-welding clamping arms, enabling the two full-welding clamping arms to clamp the to-be-welded battery 01.

The second support member 815 is designed to be able to rise or descend relative to the full-welding clamping arms, so that during the process of transferring the to-be-welded battery 01 from the full-welding transport module to the full-welding clamping tool 81, the full-welding transport module is less likely to interfere with the two full-welding clamping arms, facilitating smooth transfer of the to-be-welded battery 01 from the full-welding transport module to the full-welding clamping tool 81.

For ease of understanding, a description is provided regarding the full-welding transport module being less likely to interfere with the two full-welding clamping arms during a process of transferring the to-be-welded battery 01 from the full-welding transport module to the full-welding clamping tool 81. During the process of transferring the to-be-welded battery 01 from the full-welding transport module to the full-welding clamping tool 81, the second support member 815 can first rise to a target position, the full-welding transport module releases the to-be-welded battery 01 to place the to-be-welded battery 01 on the second support member 815, making the to-be-welded battery 01 separate from the full-welding transport module. Then, the second support member 815 descends, driving the to-be-welded battery 01 to descend between the two full-welding clamping arms. Subsequently, the two full-welding clamping arms move toward each other to clamp the to-be-welded battery 01. During this process, the full-welding transport module does not need to extend into a deep position between the two full-welding clamping arms, making the full-welding transport module less likely to interfere with the two full-welding clamping arms. In some embodiments of this disclosure, the full-welding clamping tool 81 further includes a support member lifting cylinder 816. The support member lifting cylinder 816 is configured to drive the second support member 815 to rise or descend relative to the full-welding clamping arms.

According to some embodiments of this disclosure, referring to FIG. 21 and FIG. 22, an upper surface of the second support member 815 is recessed downward to form a mounting groove. The mounting groove is configured to accommodate the to-be-welded battery 01. In this way, in a case that the second support member 815 supports the to-be-welded battery 01, the to-be-welded battery 01 is restricted in a horizontal direction, preventing tipping and facilitating clamping of the to-be-welded battery 01 by the two full-welding clamping arms.

According to some embodiments of this disclosure, referring to FIG. 21 and FIG. 22, the full-welding module further includes a second reference platform 84 and a lifting mechanism 82. The second reference platform 84 is disposed above the full-welding clamping tool 81. The lifting mechanism 82 can move relative to the clamping mechanism along a vertical direction g to apply an upward force onto the to-be-welded battery 01, causing an upper surface of the to-be-welded battery 01 to extend beyond the clamping mechanism and come into contact with the second reference platform 84.

In the embodiments of this disclosure, the second reference platform 84 has a constant posture with respect to a full-welding welder 85. In this way, the upper surface of the to-be-welded battery 01 extends beyond the clamping mechanism and comes into contact with the second reference platform 84. With the second reference platform 84 as a reference, a posture of the to-be-welded battery 01 relative to the second reference platform 84 is adjusted, and a posture of the to-be-welded battery 01 relative to the full-welding welder 85 is also adjusted, facilitating welding by the full-welding welder 85.

The lifting mechanism 82 pushes the to-be-welded battery 01 upward, so that the upper surface of the to-be-welded battery 01 extends beyond a clamping space and comes into contact with the second reference platform 84, implementing accurate positioning of the to-be-welded battery 01 in a vertical direction g. In this way, the to-be-welded battery 01 is positioned by the clamping mechanism in the horizontal direction and by the second reference platform 84 in the vertical direction g, allowing the to-be-welded battery 01 to be positioned in multiple directions with high accuracy, thereby improving welding quality.

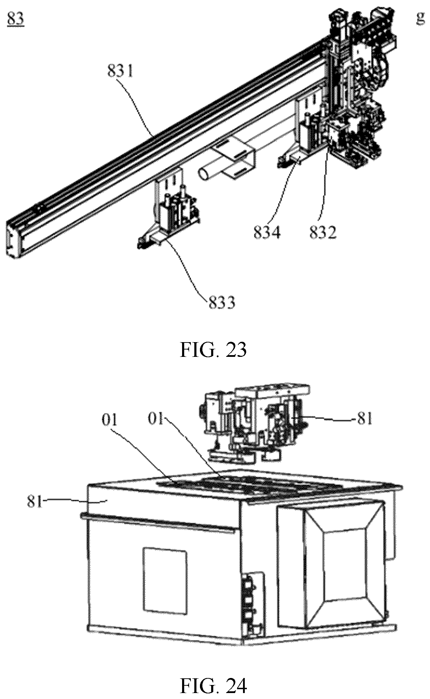

According to some embodiments of this disclosure, referring to FIG. 23 and FIG. 24, the full-welding module further includes a fourth frame. The fourth frame is fixed relative to the second reference platform 84. The full-welding clamping tool 81 is slidably connected to the fourth frame along the horizontal direction so as to move to positions corresponding to the full-welding transport module and the second reference platform 84, respectively.

The full-welding clamping tool 81 slides relative to the fourth frame along the horizontal direction to move to the positions corresponding to the full-welding transport module and the second reference platform 84, respectively. A relatively large distance exists between the full-welding transport module and the second reference platform 84, so that during the process of the full-welding transport module transporting the to-be-welded battery 01 to the full-welding clamping tool 81, it is less likely to be affected by the second reference platform 84 is less likely, facilitating smooth operation of transferring the to-be-welded battery 01 from the full-welding transport module to the full-welding clamping tool 81.

According to some embodiments of this disclosure, referring to FIG. 23 and FIG. 24, the full-welding module further includes a fourth frame. The fourth frame is fixed relative to a full-welding welder 85 of the full-welding module. The full-welding clamping tool 81 is slidably connected to the fourth frame along the horizontal direction to so as to move to positions corresponding to the full-welding transport module and the full-welding welder 85 of the full-welding module, respectively, enabling the full-welding welder 85 to perform full welding on the to-be-welded battery 01.

The full-welding clamping tool 81 slides relative to the fourth frame along the horizontal direction to move to the positions corresponding to the full-welding transport module and the full-welding welder 85, respectively. A relatively large distance exists between the full-welding transport module and the full-welding welder 85, so that during the process of the full-welding transport module transporting the to-be-welded battery 01 to the full-welding clamping tool 81, it is less likely to be affected by the full-welding welder 85, facilitating smooth operation of transferring the to-be-welded battery 01 from the full-welding transport module to the full-welding clamping tool 81.

According to some embodiments of this disclosure, referring to FIG. 21 and FIG. 22, at least two clamping mechanisms are provided. The at least two clamping mechanisms are circumferentially arranged, and an axial direction of the circumferential arrangement is the vertical direction g. In a case that the full-welding clamping tool 81 clamps the to-be-welded battery 01, the top cap 011 is located on an upper side of the housing 012.

Multiple clamping mechanisms clamp the to-be-welded battery 01, allowing the to-be-welded battery 01 to be accurately positioned in multiple directions, thereby improving welding quality. Additionally, in a case that the full-welding clamping tool 81 clamps the to-be-welded battery 01, the top cap 011 is located on the upper side of the housing 012, meaning that the welding lines are less likely to be obstructed by the clamping mechanisms, facilitating smooth welding.

According to some embodiments of this disclosure, referring to FIG. 21 and FIG. 22, at least two clamping mechanisms are provided. The two clamping mechanisms clamp the to-be-welded battery 01 along the length direction and the width direction of the to-be-welded battery 01, respectively, that is, two first full-welding clamping arms 811 clamp the to-be-welded battery 01 in the width direction of the to-be-welded battery 01, and two second full-welding clamping arms 812 clamp the to-be-welded battery 01 in the length direction of the to-be-welded battery 01. This allows the to-be-welded battery 01 to be stably and accurately positioned.

According to some embodiments of this disclosure, referring to FIG. 21 and FIG. 22, the full-welding clamping tool 81 further includes a first full-welding clamping cylinder 813. The first full-welding clamping cylinder 813 is configured to drive the two first full-welding clamping arms 811 to move toward or away from each other to clamp or release the to-be-welded battery 01. In some embodiments of this disclosure, the full-welding clamping tool 81 further includes a second full-welding clamping cylinder 814. The second full-welding clamping cylinder 814 is configured to drive the two second full-welding clamping arms 812 to move toward or away from each other to clamp or release the to-be-welded battery 01.

In some embodiments of the present disclosure, referring to FIG. 23 and FIG. 24, the full-welding module further includes a protective cover handling submodule 83. The protective cover handling submodule 83 includes a third frame 831, a material retrieval member 832, and a protective cover storage member 833. The protective cover storage member 833 is configured to store protective covers. The protective cover storage member 833 is fixed relative to the third frame 831. The material retrieval member 832 is movably disposed on the third frame 831, enabling it to move relative to the third frame 831 to positions corresponding to the protective cover storage member 833 and to-be-welded battery 01, respectively. This allows the material retrieval member 832 to place a protective cover from the protective cover storage member 833 onto the side of the top cap 011 far away from the casing 012 or to remove a protective cover from to-be-welded battery 01 and place it back onto the protective cover storage member 833.

The protective cover handling submodule 83 places a protective cover on the top cap 011 of to-be-welded battery 01, that is, the protective cover is located on a side of the top cap 011 far away from the interior of the housing 012 along the thickness direction. This allows the side of the top cap 011 far away from the housing 012 in the thickness direction to be shielded by the protective cover, effectively protecting the non-welding-line region of the to-be-welded battery 01, and reducing the damage during the welding process. The protective cover handling submodule 83 removes the protective cover from the top cap 011 of the to-be-welded battery 01, facilitating unloading of the battery. Moreover, after the protective cover is taken away, the protective cover can be placed onto another the to-be-welded battery 01 by the protective cover handling submodule 83, allowing recycling of the protective cover and improving production efficiency.

In some embodiments of the present disclosure, referring to FIG. 23 and FIG. 24, in a case that the protective cover is on the top cap 011, the protective cover can shield the poles of to-be-welded battery 01 along the thickness direction of the top cap 011. This ensures that the protective cover provides effective protection for the poles.

In some embodiments of the present disclosure, referring to FIG. 23 and FIG. 24, the material retrieval member 832 is slidably connected to the third frame 831, and the material retrieval member 832 slides relative to the third frame 831 to move to positions corresponding to the protective cover storage member 833 and to-be-welded battery 01, respectively. This results in a relatively simple structure.

According to some embodiments of this disclosure, referring to FIG. 23 and FIG. 24, the protective cover handling submodule 83 further includes a protective cover cleaning mechanism 834, and the material retrieval member 832 is capable of moving relative to a frame to a position corresponding to the protective cover cleaning mechanism 834, enabling the protective cover cleaning mechanism 834 to clean a protective cover. During a full-welding process, a protective cover placed on the top cap 011 is prone to contamination. Therefore, after the material retrieval member 832 removes the protective cover from the top cap 011 and before it places the protective cover onto the protective cover storage member 833, the material retrieval member 832 first moves to a position corresponding to the protective cover cleaning mechanism 834, enabling the protective cover cleaning mechanism 834 to clean the protective cover and remove contamination received by the protective cover during the full-welding process, facilitating reuse of the protective cover.

According to some embodiments of this disclosure, referring to FIG. 21, FIG. 22, FIG. 23, and FIG. 24, the fourth frame is fixed relative to the third frame 831, the second reference platform 84 is fixed relative to the fourth frame, and the full-welding clamping tool 81 is slidably connected to the fourth frame along a horizontal direction so as to move to positions corresponding to the full-welding transport module, the second reference platform 84, the third frame 831, and the full-welding welder 85, respectively. In a case that the full-welding clamping tool 81 is at a position corresponding to the second reference platform 84, the lifting mechanism 82 applies an upward force to the to-be-welded battery 01 clamped by the clamping mechanism, enabling an upper surface of the to-be-welded battery 01 to extend beyond the clamping space and come into contact with the second reference platform 84. In a case that the full-welding clamping tool 81 is at a position corresponding to the third frame 831, the protective cover handling submodule 83 can place or remove a protective cover on the top cap 011.

According to some embodiments of this disclosure, referring to FIG. 21, FIG. 22, FIG. 23, and FIG. 24, along a sliding direction of the full-welding clamping tool 81 relative to the fourth frame, the full-welding transport module, the second reference platform 84, the third frame 831, and the full-welding welder 85 are sequentially arranged. In this way, during a process of the full-welding clamping tool 81 sliding relative to the fourth frame, the full-welding clamping tool 81 sequentially moves to positions corresponding to the second reference platform 84, the third frame 831, and the full-welding welder 85, facilitating sequential operations of enabling the to-be-welded battery 01 to come into contact with the second reference platform 84, placing a protective cover on the top cap 011, and performing welding by the full-welding welder 85, thereby shortening a distance of the full-welding clamping tool 81 moving relative to the fourth frame. After the welding by the full-welding welder 85 is completed, the full-welding clamping tool 81 can slide relative to the fourth frame to return to a position corresponding to the third frame 831, enabling the protective cover handling submodule to retrieve the protective cover from the top cap 011, implementing reuse of the protective cover, and facilitating unloading of the battery.

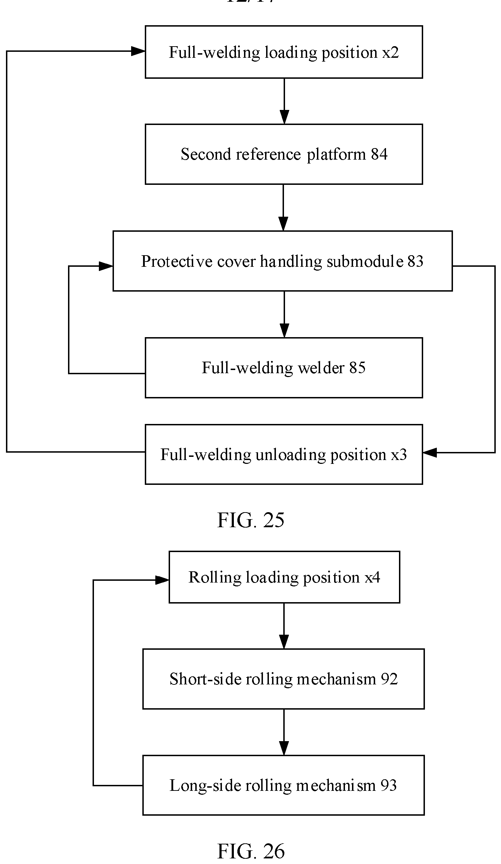

To facilitate understanding, the following describes a circulation process of the full-welding clamping tool 81. Referring to FIG. 25, according to some embodiments of this disclosure, the full-welding clamping tool 81 first receives material at a full-welding loading position x2, and then moves to the second reference platform 84, enabling the second reference platform 84 to correct a pose of the to-be-welded battery 01. Then the full-welding clamping tool 81 moves to the protective cover handling submodule 83, enabling the protective cover handling submodule 83 to place a protective cover on the top cap 011. Then the full-welding clamping tool 81 moves to the full-welding welder 85, enabling the full-welding welder 85 to perform full welding. After full welding is completed, the full-welding clamping tool 81 returns to the protective cover handling submodule 83, and the protective cover handling submodule 83 removes the protective cover from the to-be-welded battery 01. Then the full-welding clamping tool 81 moves to a full-welding unloading position x3 for unloading. After unloading, the full-welding clamping tool 81 can return to the full-welding loading position x2 to receive material again.

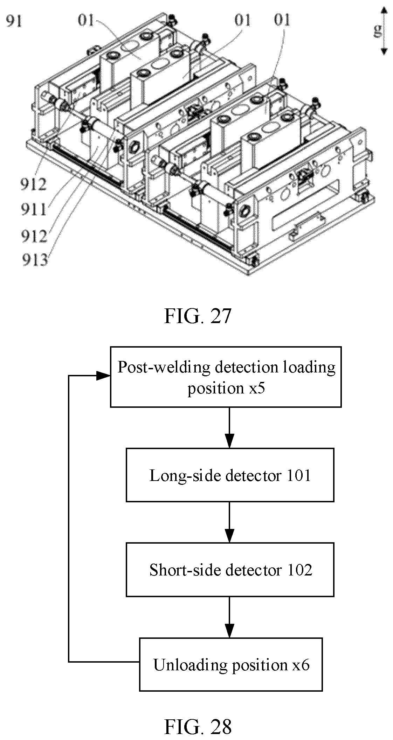

According to some embodiments of this disclosure, referring to FIG. 26 and FIG. 27, the battery top cap welding system further includes a second articulated robotic arm, a rolling frame, a rolling fixture 91, and a rolling mechanism. The second articulated robotic arm transports a battery welded by the full-welding module to a rolling loading position x4. The second articulated robotic arm may be a four-axis robotic arm or the like. The full-welding module, the rolling loading position x4, and the rolling mechanism may be sequentially arranged along a horizontal direction, and the rolling loading position x4 may be located on a side of the full-welding module far away from the spot-welding processing submodule 6. The rolling frame, the rolling loading position x4. The rolling mechanism are fixed relative to each other, and the rolling fixture 91 is movably disposed on the rolling frame so as to move to positions corresponding to the rolling loading position x4 and the rolling mechanism, respectively, to clamp a battery from the second articulated robotic arm and transport the battery from the second articulated robotic arm to the rolling mechanism, enabling the rolling mechanism to roll the battery. The rolling fixture 91 can clamp the battery along a width direction of the battery to improve clamping stability. According to some embodiments of this disclosure, the rolling fixture 91 may be slidably connected to the rolling frame to move along an arrangement direction of the rolling loading position x4 and the rolling mechanism to positions aligned with the rolling loading position x4 and the rolling mechanism, respectively, to transport the battery from the second articulated robotic arm to the rolling fixture 91.

According to some embodiments of this disclosure, referring to FIG. 26 and FIG. 27, the rolling fixture 91 includes a rolling reference clamping arm 911 and a rolling movable clamping arm 912. The rolling reference clamping arm 911 is movably disposed on the rolling frame, the rolling reference clamping arm 911 is fixedly connected to a base, the rolling movable clamping arms 912 are disposed on two sides of the rolling reference clamping arm 911, two rolling clamping cylinders 913 are disposed on the rolling reference clamping arm 911, and output ends of the two rolling clamping cylinders 913 are respectively connected to the rolling movable clamping arms 912 on two sides to respectively drive the rolling movable clamping arms 912 on two sides to move toward or away from the rolling reference clamping arm 911 to clamp the battery. In this way, two sides of the rolling reference clamping arm 911 can clamp different batteries with corresponding rolling movable clamping arms 912, enabling the rolling fixture 91 to clamp more batteries, thereby improving production efficiency.

According to some embodiments of this disclosure, referring to FIG. 26 and FIG. 27, the rolling mechanism includes a long-side rolling mechanism 93 and a short-side rolling mechanism 92. After the rolling fixture 91 clamps a battery, the rolling fixture 91 can sequentially move relative to the frame to positions corresponding to the long-side rolling mechanism 93 and the short-side rolling mechanism 92 to sequentially perform long-side rolling and short-side rolling. After rolling, the battery may be transferred from the rolling fixture 91 to another position, such as a post-welding detection fixture 103, by a third articulated robotic arm, such as a four-axis robotic arm. FIG. 25 shows a circulation process of the rolling fixture 91. The rolling fixture 91 moves sequentially from the rolling loading position x4 to the short-side rolling mechanism 92 and the long-side rolling mechanism 93, subjecting the battery to short-side rolling and long-side rolling sequentially. Then the rolling fixture 91 may return to the rolling loading position x4 to receive material again.

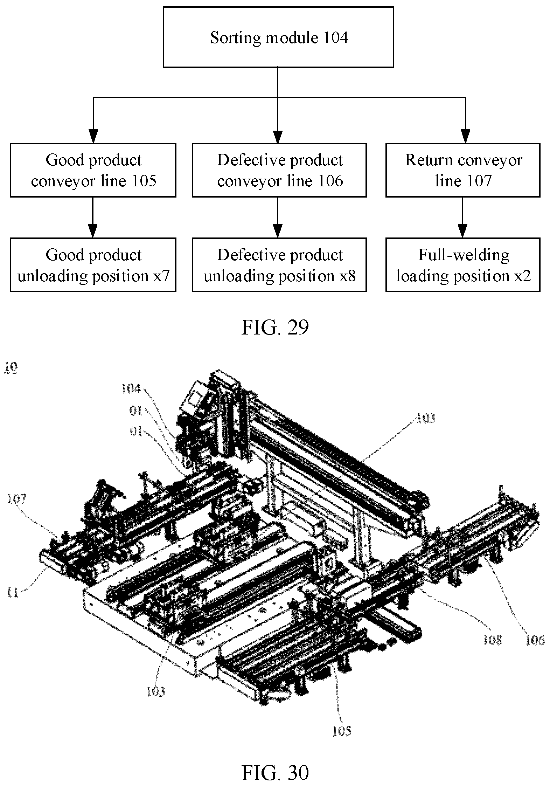

According to some embodiments of this disclosure, referring to FIG. 28, FIG. 29, and FIG. 30, the battery top cap welding system further includes an unloading and returning module 10. The unloading and returning module 10 includes a post-welding detection fixture 103, a post-welding detection mechanism 101, a sorting module 104, a good product unloading conveyor line 105, a defective product unloading conveyor line 106, and a return conveyor line 107. After a battery is transferred from the rolling fixture 91 to the post-welding detection fixture 103 by an articulated robotic arm or another mechanism, the post-welding detection fixture 103, with a cylinder clamped, moves to the post-welding detection mechanism 101, the post-welding detection mechanism 101 detects quality of the battery, and the sorting module 104 sorts the battery based on a result from the post-welding detection mechanism 101. A good battery is transported to the good product unloading conveyor line 105, enabling the good product conveyor line to transport the battery to a good product unloading position x7; a defective battery is transported to the defective product unloading conveyor line 106, enabling the defective product conveyor line to transport the battery to a defective product unloading position x8; and a battery requiring supplementary welding is transported to the return conveyor line 107, and the return conveyor line 107 transports the battery to the full-welding loading position x2 for full welding again. According to some embodiments of this disclosure, the battery top cap welding system further includes a transplant conveyor line 108. The transplant conveyor line 108 is capable of transporting batteries in opposite directions along an extension direction of the transplant conveyor line, where the good product conveyor line and the defective product conveyor line are respectively docked with two ends of the transplant conveyor line 108 to transport batteries to the good product conveyor line and the defective product conveyor line, respectively, and the sorting module 104 can transport batteries to the good product conveyor line and the defective product conveyor line via the transplant conveyor line 108. This helps to reduce space occupied by the arrangement of the conveyor lines.

According to some embodiments of this disclosure, referring to FIG. 28, FIG. 29, and FIG. 30, the post-welding detection mechanism 101 includes a long-side detector 1011 and a short-side detector 1012. The post-welding detection fixture 103 drives, under an action of a driving force, the battery to move relative to the long-side detector 1011 along the length direction of the battery, enabling the long-side detector 1011 to move along a long-side welding line of the battery, implementing detection of the battery through image stitching. After long-side detection, the short-side detector 1012 moves relative to the post-welding detection fixture 103 along a short-side welding line of the battery under an action of a driving force, implementing detection of the short-side welding lines of the battery through image stitching. FIG. 27 shows a circulation process of the post-welding detection fixture 103. The post-welding detection fixture 103 first receives material at a post-welding detection loading position x5, and then sequentially moves to the long-side detector 1011, the short-side detector 1012, and an unloading position x6. After the battery is unloaded at the unloading position x6, the post-welding detection fixture 103 returns to the post-welding detection loading position x5 to receive material again.

An embodiment of this disclosure further provides a battery top cap welding method, applied to a battery top cap welding system, where the battery top cap welding system includes a battery fixture, a power mechanism, a cleaning processing submodule, a press-fitting processing submodule 4, and a spot-welding processing submodule 6.

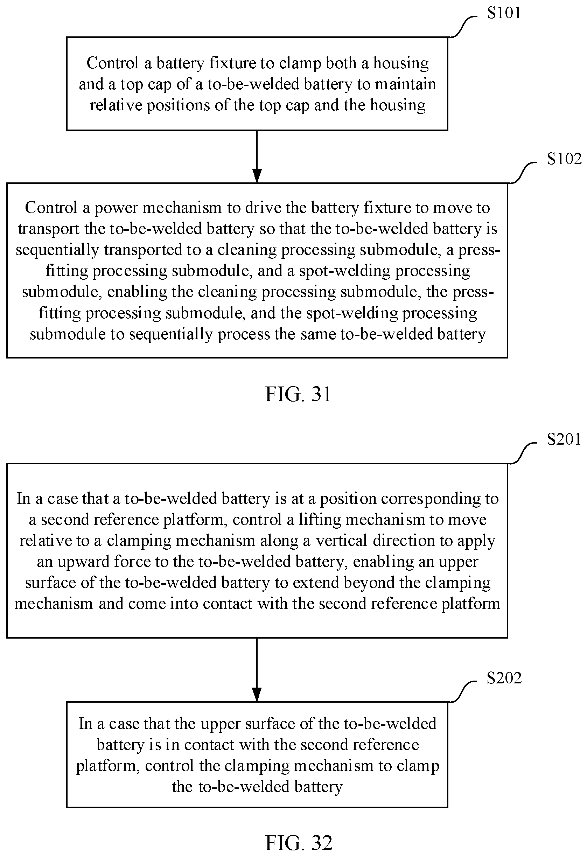

Referring to FIG. 31, the battery top cap welding method includes the following steps.

S101. Control the battery fixture to clamp both a housing and a top cap of a to-be-welded battery to maintain relative positions of the top cap and the housing.

S102. Control the power mechanism to drive the battery fixture to move to transport the to-be-welded battery so that the to-be-welded battery is sequentially transported to the cleaning processing submodule, the press-fitting processing submodule, and the spot-welding processing submodule, enabling the cleaning processing submodule, the press-fitting processing submodule, and the spot-welding processing submodule to sequentially process the same to-be-welded battery.

With arrangement of the battery fixture, the battery fixture clamps both the housing 012 and the top cap 011 of the to-be-welded battery 01 to maintain the relative positions of the housing 012 and the top cap 011, allowing the housing 012 and the top cap 011 of the to-be-welded battery 01 to be synchronously transported to the processing module for processing, thereby improving production efficiency.

According to some embodiments of this disclosure, the battery top cap welding system further includes a full-welding module; the full-welding module includes a second reference platform 84, a lifting mechanism 82, and a full-welding clamping tool 81, where the full-welding clamping tool 81 includes a clamping mechanism, and the clamping mechanism is configured to clamp the to-be-welded battery 01 along a horizontal direction. Referring to FIG. 32, the battery top cap welding method further includes the following steps.

S201. In a case that the to-be-welded battery is at a position corresponding to the second reference platform, control the lifting mechanism to move relative to the clamping mechanism along a vertical direction to apply an upward force to the to-be-welded battery, enabling an upper surface of the to-be-welded battery to extend beyond the clamping mechanism and come into contact with the second reference platform.

S202. In a case that the upper surface of the to-be-welded battery is in contact with the second reference platform, control the clamping mechanism to clamp the to-be-welded battery.

The lifting mechanism 82 applies an upward force to the to-be-welded battery 01, so that before the upper surface of the to-be-welded battery 01 extends beyond a clamping space and comes into contact with the second reference platform 84, the clamping mechanism may not clamp the to-be-welded battery 01 or may apply only a small clamping force to the to-be-welded battery 01. After the upper surface of the to-be-welded battery 01 extends beyond the clamping space and comes into contact with the second reference platform 84, meaning that a pose of the to-be-welded battery 01 is adjusted to an appropriate position, the clamping mechanism then applies a relatively large clamping force to the to-be-welded battery 01, to stably clamp the to-be-welded battery 01. This helps to reduce a friction between the to-be-welded battery 01 and the clamping mechanism during a process of the lifting mechanism 82 pushing the to-be-welded battery.

According to some embodiments of this disclosure, the full-welding module further includes a protective cover handling submodule 83.

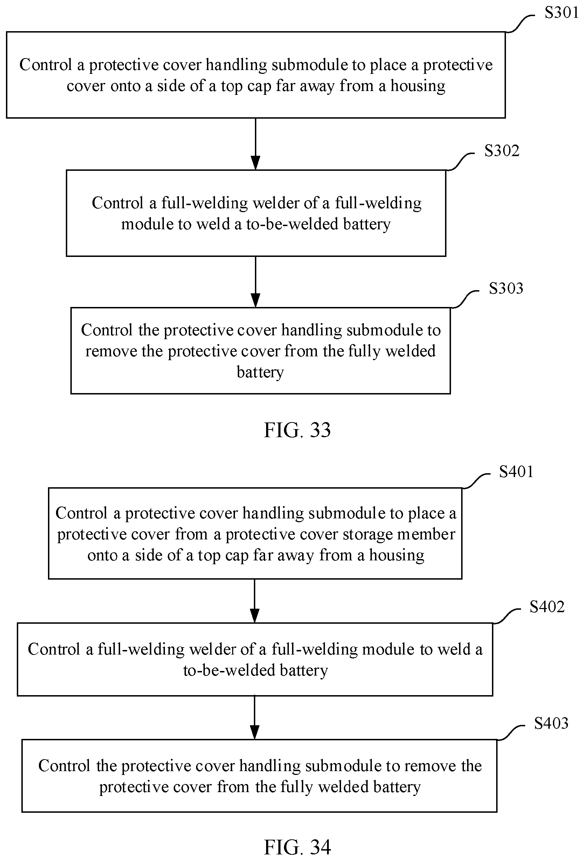

Referring to FIG. 33, the battery top cap welding method further includes the following steps.

S301. Control the protective cover handling submodule to place a protective cover onto a side of the top cap far away from the housing.

S302. Control a full-welding welder of the full-welding module to weld the to-be-welded battery.

S303. Control the protective cover handling submodule to remove the protective cover from the fully welded battery.

The protective cover handling submodule 83 places a protective cover on the top cap 011 of the to-be-welded battery 01, that is, the protective cover is located on a side of the top cap 011 far away from an interior of the housing 012 along a thickness direction, allowing the side of the top cap 011 far away from the interior of the housing 012 along the thickness direction is shielded by the protective cover. This can effectively protect the non-welding-line region of the to-be-welded battery 01, and reduce the damage during the welding process. The protective cover handling submodule 83 removes the protective cover from the top cap 011 of the to-be-welded battery 01, facilitating unloading of the battery. Additionally, after the protective cover handling submodule 83 removes the protective cover from the top cap 011 of the to-be-welded battery 01, the protective cover can be placed onto another to-be-welded battery 01 by the protective cover handling submodule 83, implementing recycling of the protective cover, and improving production efficiency.

According to some embodiments of this disclosure, the controlling the protective cover handling submodule to place a protective cover onto a side of the top cap far away from the housing includes at least one of the following: controlling the protective cover handling submodule to place the protective cover from a protective cover storage member onto the side of the top cap far away from the housing; or controlling the protective cover handling submodule to place the protective cover from the fully welded battery onto the side of the top cap far away from the housing.

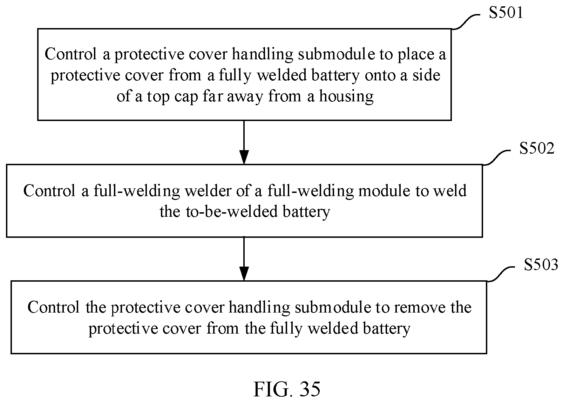

That is, referring to FIG. 34 and FIG. 35, the battery top cap welding method includes:
S401. controlling the protective cover handling submodule to place the protective cover from a protective cover storage member onto the side of the top cap far away from the housing;
S402. controlling a full-welding welder of the full-welding module to weld the to-be-welded battery; and
S403. controlling the protective cover handling submodule to remove the protective cover from the fully welded battery;
   and/or
S501. controlling the protective cover handling submodule to place the protective cover from the fully welded battery onto the side of the top cap far away from the housing;
S502. controlling a full-welding welder of the full-welding module to weld the to-be-welded battery; and
S503. controlling the protective cover handling submodule to remove the protective cover from the fully welded battery.

After the material retrieval member 832 removes the protective cover from the top cap 011 of the to-be-welded battery 01, the material retrieval member 832 can maintain a state of grasping the protective cover until another to-be-welded battery 01 is transported to a position corresponding to the protective cover handling submodule 83. Then the material retrieval member 832 can place the protective cover onto the to-be-welded battery 01. After full welding of the battery is completed, the material retrieval member 832 removes the protective cover from the battery again and repeats the above actions. The method for the material retrieval member 832 to place and remove the protective cover includes the following steps in sequence: After full welding of the to-be-welded battery 01 is completed, control the material retrieval member 832 to remove the protective cover from the top cap 011 of the to-be-welded battery 01 and maintain a state of grasping the protective cover; in a case that the to-be-welded battery 01 is transported to a position corresponding to the protective cover handling submodule 83, control the material retrieval member 832 to place the protective cover on the material retrieval member 832 onto the to-be-welded battery 01. After the protective cover has been used a sufficient number of times, meaning the same protective cover has been placed onto a sufficient number of to-be-welded batteries 01 in the above manner, the material retrieval member 832 then transports the protective cover to the protective cover storage member 833. This helps to improve production efficiency. According to some embodiments of this disclosure, the protective cover storage member 833 may be a drawer-like mechanism. After all protective covers on the protective cover storage member 833 have been used a significant number of times, the protective covers in the protective cover storage member 833 can be replaced together.

According to some embodiments of this disclosure, the battery top cap welding system includes a short-side cleaning processing submodule 2, a press-fitting processing submodule 4, a spot-welding processing submodule 6, a spot-welding detection mechanism, and a full-welding module sequentially arranged along a straight line. A first transport module 1 is disposed between a loading position x1 and the short-side cleaning processing submodule 2, a second transport module 3 is disposed between the short-side cleaning processing submodule 2 and the press-fitting processing submodule 4, a third transport module 5 is disposed between the press-fitting processing submodule 4 and the spot-welding processing submodule 6, and a spot-welding detection transport mechanism 71 is disposed between the processing module and the spot-welding detection mechanism. The first transport module 1, the second transport module 3, the third transport module 5, and the spot-welding detection transport mechanism 71 sequentially transport the to-be-welded battery 01 to the short-side cleaning processing submodule 2, the press-fitting processing submodule 4, the spot-welding processing submodule 6, and the spot-welding detection mechanism. After verified as qualified by the spot-welding detection mechanism, the to-be-welded battery 01 is transported from the spot-welding detection transport mechanism 71 to a full-welding clamping tool 81 of the full-welding module by a four-axis robotic arm, and the full-welding clamping tool 81 sequentially transports the to-be-welded battery 01 to a second reference platform 84, a protective cover handling submodule 83, and a full-welding welder 85 of the full-welding module. After welding by the full-welding welder 85 is completed, the full-welding clamping tool 81 transports the to-be-welded battery 01 to the protective cover handling submodule 83 to remove the protective cover and then unloads the battery.

The above embodiments are merely intended to illustrate the technical solutions of this disclosure and not to limit them; although this disclosure has been described in detail with reference to the foregoing embodiments, persons of ordinary skill in the art should understand that modifications can still be made to the technical solutions described in the foregoing embodiments, or equivalent replacements can be made to some or all of the technical features thereof; such modifications or replacements do not cause the essence of the corresponding technical solutions to depart from the scope of the technical solutions of the embodiments of this disclosure, and all should be encompassed within the scope of the specification of this disclosure. In particular, as long as there is no structural conflict, the various technical features mentioned in the embodiments can be combined in any manner.

## Claims

1. A battery top cap welding system, comprising:
a transport module, wherein the transport module comprises a battery fixture and a power mechanism; the battery fixture is configured to clamp both a housing and a top cap of a battery to maintain relative positions of the top cap and the housing; and the battery fixture is disposed on an output end of the power mechanism so as to move, driven by the output end of the power mechanism, to transport the to-be-welded battery; and
a processing module, wherein the processing module comprises a cleaning processing submodule, a press-fitting processing submodule, and a spot-welding processing submodule, wherein the cleaning processing submodule, the press-fitting processing submodule, and the spot-welding processing submodule are all disposed at an output end of the corresponding transport module to sequentially process the same to-be-welded battery transported by the battery fixture; and
the processing module comprises a clamping tool, wherein the clamping tool is configured to clamp both the housing and the top cap to maintain the relative positions of the top cap and the housing, and enable the processing module to process the to-be-welded battery.

2. The battery top cap welding system according to claim 1, wherein the battery fixture comprises two transport clamping arms disposed opposite each other along a first direction, wherein the two transport clamping arms together form a clamping space to clamp an outer surface of the to-be-welded battery; and in a case that the battery fixture clamps the to-be-welded battery, the top cap faces an opening of the housing, the first direction is perpendicular to an axial direction of the opening, and the two transport clamping arms each span across the top cap and the housing to clamp both the top cap and the housing along the first direction.

3. The battery top cap welding system according to claim 1 or 2, wherein in a case that the battery fixture is at a position corresponding to the processing module, the battery fixture and the clamping tool are staggered to enable the battery fixture and the clamping tool to jointly clamp the to-be-welded battery.

4. The battery top cap welding system according to any one of claims 1 to 3, wherein the battery top cap welding system comprises a first transport module, wherein the cleaning processing submodule is disposed at an output end of the first transport module to clean a welding line of the to-be-welded battery transported by the first transport module; and
the first transport module comprises a first battery fixture, wherein the first battery fixture comprises a first insertion member; and in a case that the first battery fixture clamps the to-be-welded battery, a first gap is present between the top cap and the opening of the housing in a thickness direction of the top cap, and the first insertion member extends into the first gap and fits with the first gap.

5. The battery top cap welding system according to claim 4, wherein the first battery fixture comprises two transport clamping arms disposed opposite each other, wherein the two transport clamping arms together form a clamping space to clamp an outer surface of the to-be-welded battery; and the first insertion member is a protrusion formed on a surface of one of the two transport clamping arms facing the other, the first insertion member is fixed to the corresponding transport clamping arm, and the first insertion member extends into the first gap along a direction in which the first insertion member protrudes relative to the corresponding transport clamping arm.

6. The battery top cap welding system according to any one of claims 1 to 5, wherein the battery top cap welding system comprises a first transport module, wherein the cleaning processing submodule is disposed at an output end of the first transport module to clean a welding line of the to-be-welded battery transported by the first transport module;
the first transport module comprises a first battery fixture, wherein the first battery fixture comprises two transport clamping arms disposed opposite each other, and the two transport clamping arms together form a clamping space to clamp an outer surface of the to-be-welded battery; and in a case that the first battery fixture clamps the to-be-welded battery, an arrangement direction of the two transport clamping arms of the first battery fixture is consistent with a length direction of the to-be-welded battery; and
the first transport module further comprises a first power mechanism, wherein the first power mechanism is capable of driving the first battery fixture to move along the arrangement direction of the two transport clamping arms, to cause a long-side cleaning module to move relative to the to-be-welded battery along a long-side welding line of the to-be-welded battery to clean the long-side welding line.

7. The battery top cap welding system according to claim 6, wherein the first battery fixture further comprises two large-surface clamping arms disposed opposite each other, wherein the two large-surface clamping arms together form a clamping space to clamp an outer surface of the to-be-welded battery; and in a case that the first battery fixture clamps the to-be-welded battery, the two large-surface clamping arms are both located on a side of an opening of the housing closer to an interior of the housing in an axial direction of the opening, and a direction in which the two large-surface clamping arms are disposed opposite each other is consistent with a width direction of the to-be-welded battery.

8. The battery top cap welding system according to any one of claims 1 to 7, wherein the cleaning processing submodule comprises a cleaning clamping tool; wherein in a case that the cleaning clamping tool clamps the to-be-welded battery, the top cap faces an opening of the housing; and a cleaner of the cleaning processing submodule is movably connected to the cleaning clamping tool so that in a case that the cleaning clamping tool clamps the to-be-welded battery, the cleaner of the cleaning processing submodule is capable of moving along a welding line of the to-be-welded battery to synchronously clean the top cap and the housing.

9. The battery top cap welding system according to claim 8, wherein the cleaning clamping tool comprises two cleaning clamping arms disposed opposite each other along a second direction, wherein the two cleaning clamping arms together form a clamping space to clamp an outer surface of the to-be-welded battery; and in a case that the cleaning clamping tool clamps the to-be-welded battery, the second direction is perpendicular to the axial direction of the opening, and the two cleaning clamping arms each span across the top cap and the housing to clamp both the top cap and the housing along the second direction.

10. The battery top cap welding system according to claim 9, wherein the cleaning clamping tool comprises a second insertion member; and in a case that the cleaning clamping tool clamps the to-be-welded battery, a second gap is present between the top cap and the opening in the thickness direction of the top cap, and the second insertion member extends into the second gap and fits with the second gap.

11. The battery top cap welding system according to claim 10, wherein the second insertion member is a protrusion formed on a surface of one of the two cleaning clamping arms facing the other, and the second insertion member is fixed to the corresponding cleaning clamping arm, and extends into the second gap along a direction in which the second insertion member protrudes relative to the corresponding cleaning clamping arm.

12. The battery top cap welding system according to any one of claims 9 to 11, wherein the cleaning processing submodule comprises a short-side cleaning processing submodule; the short-side cleaning processing submodule comprises a short-side cleaning clamping tool; and in a case that the short-side cleaning clamping tool clamps the to-be-welded battery, an arrangement direction of two cleaning clamping arms of the short-side cleaning clamping tool is consistent with the width direction of the to-be-welded battery.

13. The battery top cap welding system according to claim 12, wherein the battery top cap welding system comprises a second transport module, wherein the short-side cleaning processing submodule is disposed at an input end of the second transport module, to enable the second transport module to transport the to-be-welded battery through the short-side cleaning processing submodule; and
two transport clamping arms of the battery fixture of the second transport module are disposed opposite each other along the second direction, wherein the two transport clamping arms together form a clamping space to clamp an outer surface of the to-be-welded battery; and the two cleaning clamping arms are configured to clamp a third portion of the to-be-welded battery, the two transport clamping arms of the second transport module are configured to clamp a fourth portion of the to-be-welded battery, and the third portion and the fourth portion are arranged along the length direction of the to-be-welded battery, to enable the cleaning clamping arms and the transport clamping arms of the second transport module to jointly clamp the outer surface of the to-be-welded battery.

14. The battery top cap welding system according to any one of claims 1 to 13, wherein the battery top cap welding system comprises a second transport module, wherein the press-fitting processing submodule is disposed at an output end of the second transport module so as to press-fit the to-be-welded battery transported by the second transport module; and
the clamping tool of the press-fitting processing submodule comprises: two first press-fitting clamping arms disposed opposite each other along a third direction, wherein the two first press-fitting clamping arms together form a clamping space to clamp an outer surface of the to-be-welded battery; and two second press-fitting clamping arms disposed opposite each other along a fourth direction, wherein the two second press-fitting clamping arms together form a clamping space to clamp an outer surface of the to-be-welded battery; and in a case that the clamping tool clamps the to-be-welded battery, the top cap faces the opening of the housing directly, the third direction and the fourth direction are respectively consistent with the length direction and the width direction of the to-be-welded battery, and the two first press-fitting clamping arms and the two second press-fitting clamping arms each span across the top cap and the housing of the to-be-welded battery to clamp both the top cap and the housing along the third direction and the fourth direction, respectively.

15. The battery top cap welding system according to any one of claims 1 to 14, wherein the battery top cap welding system comprises a third transport module, wherein the press-fitting processing submodule is disposed at an input end of the third transport module, to enable the third transport module to transport the to-be-welded battery through the press-fitting processing submodule; and a battery fixture of the third transport module comprises a pressing member, wherein the pressing member is configured to apply a force toward the housing onto the top cap, to maintain the top cap in a press-fitting position.

16. The battery top cap welding system according to claim 15, wherein the battery fixture of the third transport module comprises two transport clamping arms, wherein the two transport clamping arms are disposed opposite each other, and the two transport clamping arms together form a clamping space to clamp an outer surface of the to-be-welded battery; and the pressing member is slidably connected to the transport clamping arm, and in a case that the two transport clamping arms clamp the outer surface of the to-be-welded battery, a direction in which the two transport clamping arms are disposed opposite each other is perpendicular to the axial direction of the opening of the housing, and a direction in which the pressing member slides relative to the transport clamping arms is consistent with the height direction of the to-be-welded battery, to enable the pressing member to apply a force toward the housing onto the top cap.

17. The battery top cap welding system according to any one of claims 1 to 16, wherein the battery top cap welding system comprises a third transport module, wherein the press-fitting processing submodule is disposed at an input end of the third transport module, to enable the third transport module to transport the to-be-welded battery through the press-fitting processing submodule; and
a battery fixture of the third transport module comprises a first support member, wherein the first support member is configured to support a side of the housing far away from the top cap, to enable the press-fitting processing submodule to press-fit the to-be-welded battery.

18. The battery top cap welding system according to any one of claims 1 to 17, wherein the battery top cap welding system comprises a third transport module, wherein the spot-welding processing submodule is disposed at an output end of the third transport module, to enable the spot-welding processing submodule to spot weld the top cap transported by the third transport module to the housing; and
a clamping tool of the spot-welding processing submodule comprises a first reference platform, wherein the first reference platform is configured to apply a force toward the housing onto the top cap along the height direction of the to-be-welded battery, to maintain the top cap in the press-fitting position and enable the spot-welding processing submodule to spot weld the to-be-welded battery; and in a case that the battery fixture of the third transport module clamps the to-be-welded battery, at least a portion of the top cap is exposed outside a clamping cavity of the battery fixture, to enable the first reference platform to abut against the top cap.

19. The battery top cap welding system according to any one of claims 1 to 18, wherein the clamping tool of the spot-welding processing submodule comprises: two first spot-welding clamping arms disposed opposite each other along a fifth direction, wherein the two first spot-welding clamping arms together form a clamping space to clamp an outer surface of the to-be-welded battery; and two second spot-welding clamping arms disposed opposite each other along a sixth direction, wherein the two second spot-welding clamping arms together form a clamping space to clamp an outer surface of the to-be-welded battery; and in a case that the clamping tool clamps the to-be-welded battery, the top cap faces the opening of the housing directly, and the fifth direction and the sixth direction are respectively consistent with the length direction and the width direction of the to-be-welded battery.

20. The battery top cap welding system according to any one of claims 1 to 19, wherein the spot-welding processing submodule comprises a step detection mechanism, and the spot-welding processing submodule further comprises a first frame, wherein the first frame is fixed relative to the step detection mechanism, and the clamping tool of the spot-welding processing submodule is slidably connected to the first frame, to enable the step detection mechanism to move relative to the to-be-welded battery along the welding line of the to-be-welded battery and perform step detection on the to-be-welded battery.

21. The battery top cap welding system according to any one of claims 1 to 20, wherein the battery top cap welding system further comprises a full-welding module and a full-welding transport module, wherein an input end of the full-welding transport module is connected to the spot-welding processing submodule, and an output end is connected to the full-welding module to transport the to-be-welded battery from the spot-welding processing submodule to the full-welding module.

22. The battery top cap welding system according to claim 21, wherein the full-welding module comprises a full-welding clamping tool, and the full-welding clamping tool comprises a clamping mechanism and a second support member, wherein the clamping mechanism comprises two full-welding clamping arms disposed opposite each other along a horizontal direction, the two full-welding clamping arms together form a clamping space to clamp an outer surface of the to-be-welded battery; and along a direction in which the two full-welding clamping arms are disposed opposite each other, the second support member is located between the two full-welding clamping arms and is configured to support the to-be-welded battery located between the two full-welding clamping arms along a vertical direction.

23. The battery top cap welding system according to claim 22, wherein the full-welding clamping tool further comprises a second frame, wherein the two full-welding clamping arms are movably connected to the second frame to clamp or release the to-be-welded battery; and the second support member is slidably connected to the frame along the vertical direction so as to rise to a target position to support the to-be-welded battery transported by the full-welding transport module, and drive the to-be-welded battery to descend to a position between the two full-welding clamping arms, enabling the two full-welding clamping arms to clamp the to-be-welded battery.

24. The battery top cap welding system according to claim 22 or 23, wherein the full-welding module further comprises a second reference platform and a lifting mechanism, wherein the second reference platform is disposed above the full-welding clamping tool, and the lifting mechanism is capable of moving relative to the clamping mechanism along the vertical direction to apply an upward force to the to-be-welded battery, causing an upper surface of the to-be-welded battery to extend beyond the clamping mechanism and come into contact with the second reference platform.

25. The battery top cap welding system according to claim 24, wherein the full-welding module further comprises a fourth frame, the fourth frame is fixed relative to the second reference platform, and the full-welding clamping tool is slidably connected to the fourth frame along the horizontal direction so as to move to positions corresponding to the full-welding transport module and the second reference platform, respectively.

26. The battery top cap welding system according to any one of claims 22 to 25, wherein the full-welding module further comprises a fourth frame, wherein the fourth frame is fixed relative to a full-welding welder of the full-welding module, and the full-welding clamping tool is slidably connected to the fourth frame along the horizontal direction so as to move to positions corresponding to the full-welding transport module and the full-welding welder of the full-welding module, respectively, enabling the full-welding welder to perform full welding on the to-be-welded battery.

27. The battery top cap welding system according to any one of claims 22 to 26, wherein at least two clamping mechanisms are provided, the at least two clamping mechanisms are circumferentially arranged, and an axial direction of the circumferential arrangement is the vertical direction; and in a case that the full-welding clamping tool clamps the to-be-welded battery, the top cap is located on an upper side of the housing.

28. The battery top cap welding system according to any one of claims 21 to 27, wherein the full-welding module further comprises a protective cover handling submodule, and the protective cover handling submodule comprises a third frame, a material retrieval member, and a protective cover storage member, wherein the protective cover storage member is configured to store a protective cover, the protective cover storage member is fixed relative to the third frame, and the material retrieval member is movably disposed on the third frame so as to move relative to the third frame to positions corresponding to the protective cover storage member and the to-be-welded battery, respectively, to place the protective cover from the protective cover storage member onto a side of the top cap far away from the housing or to place the protective cover from the to-be-welded battery onto the protective cover storage member.

29. A battery top cap welding method, applied to a battery top cap welding system, wherein the battery top cap welding system comprises a battery fixture, a power mechanism, a cleaning processing submodule, a press-fitting processing submodule, and a spot-welding processing submodule; and the battery top cap welding method comprises:
controlling the battery fixture to clamp both a housing and a top cap of a to-be-welded battery to maintain relative positions of the top cap and the housing; and
controlling the power mechanism to drive the battery fixture to move to transport the to-be-welded battery so that the to-be-welded battery is sequentially transported to the cleaning processing submodule, the press-fitting processing submodule, and the spot-welding processing submodule, enabling the cleaning processing submodule, the press-fitting processing submodule, and the spot-welding processing submodule to sequentially process the same to-be-welded battery.

30. The battery top cap welding method according to claim 29, wherein the battery top cap welding system further comprises a full-welding module; the full-welding module comprises a second reference platform, a lifting mechanism, and a full-welding clamping tool, wherein the full-welding clamping tool comprises a clamping mechanism, and the clamping mechanism is configured to clamp the to-be-welded battery along a horizontal direction; and the battery top cap welding method further comprises:
in a case that the to-be-welded battery is at a position corresponding to the second reference platform, controlling the lifting mechanism to move relative to the clamping mechanism along a vertical direction to apply an upward force to the to-be-welded battery, enabling an upper surface of the to-be-welded battery to extend beyond the clamping mechanism and come into contact with the second reference platform; and
in a case that the upper surface of the to-be-welded battery is in contact with the second reference platform, controlling the clamping mechanism to clamp the to-be-welded battery.

31. The battery top cap welding method according to claim 30, wherein the full-welding module further comprises a protective cover handling submodule; and the battery top cap welding method further comprises:
controlling the protective cover handling submodule to place a protective cover onto a side of the top cap far away from the housing;
controlling a full-welding welder of the full-welding module to weld the to-be-welded battery; and
controlling the protective cover handling submodule to remove the protective cover from the fully welded battery.

32. The battery top cap welding method according to claim 31, wherein the controlling the protective cover handling submodule to place a protective cover onto a side of the top cap far away from the housing comprises at least one of the following:
controlling the protective cover handling submodule to place the protective cover from a protective cover storage member onto the side of the top cap far away from the housing; or
controlling the protective cover handling submodule to place the protective cover from the fully welded battery onto the side of the top cap far away from the housing.
